# EUROPÄISCHE PATENTANMELDUNG

(11) **EP 3 848 911 A1**
(43) Veröffentlichungstag der Anmeldung: **14.07.2021**
(21) Anmeldenummer: 20216360.6
(22) Anmeldetag: 22.12.2020
(51) Int. Cl.: G07C 9/00, G06Q 10/08, G07C 9/27, G07C 9/28

(54) **VERFAHREN UND VORRICHTUNG ZUM AUTHENTIFIZIEREN EINES BENUTZERS EINER FACHANLAGE**

(30) Priorität: 13.01.2020 DE 102020100543
(71) Anmelder: Deutsche Post AG, 53113 Bonn (DE)
(72) Erfinder: HELFERICH, Frank, 53547 Leubsdorf (DE); BAYE, Thomas, 53173 Bonn (DE); DAUTZ, Christoph, 53225 Bonn (DE); OBERLÄNDER, Philipp, 53129 Bonn (DE); REICHWALD, Frank, 53842 Troisdorf (DE)
(74) Vertreter: Cohausz & Florack

(57) **Zusammenfassung**

Offenbart wird u.a. ein Verfahren umfassend Durchführen eines Prozesses zum Authentifizieren eines Benutzers (250, 350,450, 550) einer Fachanlage (3) gegenüber einem die Fachanlage verwaltenden Backend-System (2), wobei notwendige Bedingung für das Durchführen des Prozesses zum Authentifizieren des Benutzers (250, 350, 450, 550) ist, dass eine Näheprüfung (200, 400, 500) ergeben hat, dass sich ein Mobilgerät (4) des Benutzers (5) am Ort der Fachanlage (3) befindet, und/oder dass eine Belegungsprüfung (310, 410, 510) ergeben hat, dass die Fachanlage (3) mindestens eine dem Benutzer (5) zugeordnete Sendung enthält. Weiterhin werden eine entsprechende Vorrichtung, ein entsprechendes System und ein entsprechendes Computerprogramm offenbart

## Beschreibung

### Gebiet

Beispielhafte Ausführungsformen der Erfindung betreffen ein Verfahren, eine Vorrichtung, ein System und ein Computerprogramm zum Authentifizieren eines Benutzers einer Fachanlage, insbesondere einer Fachanlage zum Abholen und/oder Einstellen von Sendungen von Zustell- oder Lieferdiensten.

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein Empfänger Sendungen liefern lassen kann. Die Sendung wird vom Zusteller in ein Fach einer in der Nähe des Empfängers befindlichen und/oder von dem Empfänger zuvor festgelegten Packstation eingelegt, das Fach verschlossen und der Empfänger entsprechend benachrichtigt. Damit der benachrichtigte Empfänger eine für ihn bereitgestellte Sendung aus einem Fach der Fachanlage entnehmen kann, muss der Empfänger vor dem Öffnen des Fachs oder der Fächer mittels Bereitstellung einer oder mehrerer korrekter Zugangsberechtigungsinformationen sich authentisieren bzw. seine Zugangsberechtigung nachweisen.

Bei einer Realisierung der oben genannten Packstation der Anmelderin muss der Empfänger beim Nachweis der Berechtigung zum Zugang zu einem Fach oder mehreren Fächern eine ihm funktional als Kundennummer dauerhaft zugeordnete Benutzerkennung, auch Postnummer genannt, und zudem einen temporär gültigen Abholcode in ein Eingabegerät, beispielsweise eine Zifferntastatur, der Packstation eingeben. Der temporär gültige Abholcode, aus der erwähnten Realisierung der Anmelderin als mTAN (mobile Transaktionsnummer) bekannt, ist dem Benutzer zuvor zusammen mit der Benachrichtigung, dass eine oder mehrere Sendungen für ihn in der bezeichneten Packstation zur Abholung bereitstehen, elektronisch übermittelt worden. Die jeweiligen Zugangsberichtigungsinformationen von zur Packstation-Nutzung registrierten Benutzern, also die Benutzerkennungen und die Abholcodes bzw. Postnummern und mTANs, werden durch ein Backend-System verwaltet und gespeichert. Die als Fachanlagen fungierenden Packstationen sind mit dem Backend-System über Weitbereich-Datenkommunikationsverbindungen, beispielsweise über LAN- (Local Area Network) Schnittstellen, zum Austausch von für die Zugangsberechtigungsprüfung benötigten Daten gekoppelt.

Als Schutz vor Angriffen mit dem Ziel einer Erlangung eines unberechtigten Zugangs zu den Packstation-Fächern und möglichem Diebstahl der darin enthaltenen Sendungen wird im Fall einer dreimaligen Eingabe eines ungültigen Abholcodes der Benutzer bzw. dessen Benutzerkennung von einer zukünftigen Packstation-Nutzung vollständig ausgeschlossen, indem eine Sperrung des Benutzers bzw. seiner Benutzerkennung in dem Backend-System registriert und gespeichert wird. Für eine Entsperrung seiner Benutzerkennung muss der gesperrte Benutzer eine Packstation-Verwaltungsperson aufsuchen.

### Zusammenfassung einiger beispielhafter Ausführungsformen der Erfindung

Damit einem Benutzer einer Fachanlage Zugang zu einem oder mehreren Fächern der Fachanlage gewährt wird, muss der Benutzer zuvor mittels Bereitstellung von Zugangsanforderungsinformation(en), wie beispielsweise der oben erwähnten Postnummer und mTAN, während einer Authentisierung seine Identität und/oder Zugangsberechtigung nachweisen. Anschließend prüft eine Authentifizierungsvorrichtung durch Ausführen eines Prozesses zum Authentifizieren des Benutzers, ob oder ob nicht die von dem Benutzer behauptete Identität und/oder Zugangsberechtigung gültig ist. Nur falls durch die Prüfung bei dem Prozess zum Authentifizieren des Benutzers die Gültigkeit der behaupteten Identität und/oder Zugangsberechtigung festgestellt worden ist, wird der Benutzer positiv authentifiziert bzw. zu einem Zugang zu einem oder mehreren Fächern der Fachanlage autorisiert. Bei dem Prozess zum Authentifizieren des Benutzers prüft die Authentifizierungsvorrichtung die Gültigkeit der zur Authentisierung bereitgestellten Zugangsanforderungsinformation(en) mittels Referenzierung gespeicherter Zugangsberechtigungsinformationen. Der Benutzer wird nur unter der Bedingung durch die Authentifizierungsvorrichtung positiv authentifiziert und zum Zugang autorisiert, falls die Authentifizierungsvorrichtung die Gültigkeit der bei der Authentisierung bereitgestellten Zugangsanforderungsinformation(en) verifiziert und bestätigt hat. Beispielsweise authentifiziert die Authentifizierungsvorrichtung den Benutzer nur dann positiv, falls die von dem Benutzer bereitgestellte Zugangsanforderungsinformation mit einer für diesen Benutzer gespeicherten Zugangsberechtigungsinformation übereinstimmt oder mittels einer vorgegebenen Transformation auf diese abgebildet werden kann.

Die Speicherung und Verwaltung der für die Authentifizierung referenzierten Zugangsberechtigungsinformatiönen der Benutzer einer oder mehrerer derartiger Fachanlagen erfolgt durch ein Backend-System. Das Backend-System ist durch eine oder mehrere Server-Vorrichtungen gebildet, die die Zugangsberechtigungsinformationen registrierter Benutzer für die Durchführung eines Prozesses zum Authentifizieren eines Benutzers verwalten und abrufbereit speichern.

Die vorliegende Anmeldung ist auf Verfahren zum Authentifizieren eines Benutzers einer Fachanlage und auf zum Ausführen derartiger Verfahren ausgebildete Vorrichtungen gerichtet, bei denen der Benutzer bei der Authentisierung Zugangsanforderungsinformationen bereitstellt und anschließend auf Grundlage von in dem Backend-System gespeicherten Zugangsberechtigungsinformationen eine Authentifizierung des Benutzers versucht wird. Nur wenn die bereitgestellte Zugangsanforderungsinformation zu der gespeicherten Zugangsberechtigungsinformation passt, wird der Benutzer erfolgreich bzw. positiv authentifiziert und als legitimierter Benutzer zum Zugang zu einem oder mehreren Fächern der Fachanlage autorisiert.

Um zu einem Zugang zu einem Fach oder mehreren Fächern einer durch das Backend-System verwalteten Fachanlage autorisiert zu werden, muss der Benutzer durch Mitwirkung und Beteiligung des Backend-System positiv authentifiziert werden. Die Prüfung bzw. Verifizierung, dass es sich bei dem sich authentisierenden Benutzer um einen tatsächlich zum Zugang auf ein Fach oder mehrere Fächer einer durch das Backend-System verwalteten Fachanlage berechtigten Benutzer handelt, erfolgt mit Verwendung von in dem Backend-System gespeicherten Zugangsberechtigungsinformationen, bevorzugt mit Zugriff auf die in dem Backend-System gespeicherten Zugangsberechtigungsinformationen während des Prozesses zum Authentifizieren des Benutzers.

Zur Gewährleistung eines sicheren und stabilen Betriebs des Backend-Systems und somit auch der durch das Backend-System verwalteten Fachanlage(n) muss das Backend-System vor böswilligen Angreifern geschützt werden. Einerseits müssen die im Backend-System gespeicherten Zugangsberechtigungsinformationen vor einem unberechtigten Zugriff geschützt werden. Es muss verhindert werden, dass Angreifer gültige Zugangsanforderungsinformationen beispielsweise durch beliebig häufiges Austesten einer Vielzahl von Passwörtern und Codes mittels eines sogenannten Brute-Force-Angriffs ermitteln und durch Authentisierung anhand der unzulässig erlangten Zugangsanforderungsinformationen Zugang zu den Fächern der Fachanlage erlangen. Außerdem muss das Backend-System vor sogenannten Denial-of-Service-Angriffen geschützt werden, bei denen Angreifer durch eine Flut permanent getätigter Authentifizierungsanfragen den Betrieb des die Fachanlagen verwaltenden Backend-Systems und somit auch den Betrieb aller verwalteten Fachanlagen zum Erliegen bringen.

Bei dem eingangs dargestellten Packstation-Konzept der Anmelderin muss ein Benutzer einer Packstation zunächst eine Zugangsinformationen in Form der dem Benutzer dauerhaft zugeordneten und daher kaum geheimen, sechs- bis zwölfstelligen Postnummer und eines nur temporär gültigen, durch wenige Ziffern gebildeten Abholcodes, der ihm anlässlich der Einlegung einer oder mehrerer für ihn bestimmten Sendungen in die Packstation elektronisch übermittelt wurde, in ein Eingabeterminal der Packstation, beispielsweise eine Zifferntastatur, eingeben. Da die Postnummern allerhöchstens eingeschränkt geheim bzw. sogar bekannt und aus einem eingeschränkten Werteraum entnommen sind, und die Abholcodes aus einem sehr eingeschränkten Werteraum stammen, sind sehr strenge Schutzmaßnahmen erforderlich, um einen unberechtigten Zugang zu den Fächern der Fachanlage durch Austesten von Codekombinationen zu unterbinden. Die vollständige Sperrung eines Benutzers bzw. seiner Benutzerkennung in Reaktion auf eine dreimalige Eingabe eines ungültigen Abholcodes reicht als derartige Schutzmaßnahme gegen Angreifer aus, ist aber für einen an sich vertrauenswürdigen und zuverlässigen Benutzer, der aufgrund einer kurzen Unaufmerksamkeit bei der Code-Eingabe gesperrt wird, sehr unkomfortabel und ärgerlich. Aus der Sicht eines Packstation-Betreibers bringt die skizzierte unnötig strenge Behandlung des lediglich unaufmerksamen Benutzers den Nachteil mit sich, dass die dem Benutzer zum Zeitpunkt der Sperrung zugeordneten Fächer der Fachanlage mindestens bis zur Entsperrung des Benutzers bzw. seiner Benutzerkennung blockiert sind, oder sogar eine Fächer-Leerung durch den Packstation-Betreiber erforderlich wird.

Denial-of-Service-Angriffe werden bei dem eingangs dargestellten Packstation-Konzept der Anmelderin dadurch wirkungsvoll verhindert, dass die Zugangsanforderungsinformationen, also die Postnummer und die mTAN, von dem Benutzer manuell in ein Eingabegerät der Packstation eingegeben werden müssen, so dass ein ständiges und ferngesteuertes Initiieren einer Flut von Authentifizierungsprozessen nicht möglich ist.

Das eingangs dargestellte Packstation-System der Anmelderin und die dafür eingerichteten Mechanismen zum Authentifizieren und Autorisieren registrierter Packstation-Benutzer haben bei den Benutzern in den letzten Jahren sehr große Akzeptanz gefunden. Allerdings sind der technische Aufwand und die erforderlichen Kosten zur Realisierung des oben dargestellten Packstation-Systems der Anmelderin hoch. In jeder Packstation bzw. Fachanlage ist ein jeweiliger leistungsfähiger Computer mit hohem Stromverbrauch enthalten bzw. dieser zugeordnet. Außerdem muss jeder dieser Computer über eine drahtgebundene und/oder drahtlose Datenkommunikationsverbindung, beispielsweise über das Internet, mit dem Backend-System verbunden sein, um zum Authentifizieren und Autorisieren von Benutzern und zum Verwalten der Fächer Daten auszutauschen. Aus der Sicht der Anmelderin ist es erstrebenswert, die Betriebs- und Herstellungskosten bestehender und zukünftig zu errichtender Fachanlagen zu senken, ohne dass die Benutzer mit einer Änderung bzw. Umstellung des bisher gewohnten Verfahrens zum Nachweis ihrer Zugangsberechtigung konfrontiert werden müssen. Zudem soll das bisher gewohnte hohe Niveau des Schutzes vor Angriffen auf die Fachanlagen und das Backend-System erhalten bleiben.

Die vorliegende Erfindung hat sich die Aufgabe gestellt, einen oder mehrere der oben beschriebenen Nachteile zu überwinden und/oder eine oder mehrere der oben beschriebenen angestrebten Verbesserungen zu erreichen.

Vorgestellt werden eine beispielhafte Ausführungsform eines erfindungsgemäßen Verfahrens sowie einer zugehörigen Vorrichtung, eines zugehörigen Systems und eines zugehörigen Computerprogramms.

Eine beispielhafte Ausführungsform eines erfindungsgemäßen Verfahrens umfasst ein Durchführen eines Prozesses zum Authentifizieren eines Benutzers einer Fachanlage gegenüber einem die Fachanlage verwaltenden Backend-System. Eine notwendige Bedingung für das Durchführen des Prozesses zum Authentifizieren des Benutzers ist, dass eine Näheprüfung ergeben hat, dass sich ein Mobilgerät des Benutzers am Ort der Fachanlage befindet. Eine alternative oder optionale weitere notwendige Bedingung für das Durchführen des Prozesses zum Authentifizieren des Benutzers ist, dass eine Belegungsprüfung ergeben hat, dass die Fachanlage mindestens eine dem Benutzer zugeordnete Sendung enthält. Die beispielhafte Ausführungsform des erfindungsgemäßen Verfahrens wird partiell oder vollständig beispielsweise durch mindestens eine als Authentifizierungsvorrichtung ausgebildete Vorrichtung des Backend-Systems durchgeführt.

Im Folgenden werden weitere beispielhafte Eigenschaften der beispielhaften Ausführungsform des erfindungsgemäßen Verfahrens vorgestellt, die in gleichem Maße für die zugehörige Vorrichtung, das zugehörige System und das zugehörige Computerprogramm als offenbart anzusehen sind und insbesondere auch in allen technisch sinnvollen Kombinationen miteinander offenbart anzusehen sind.

Die Fachanlage umfasst eine Vielzahl von Fächern (also beispielsweise mehr als ein Fach oder mehr als zwei Fächer). Die Fächer sind beispielsweise zur Aufnahme von Sendungen (z.B. Briefe, Pakete, Päckchen), Lieferungen (z.B. gereinigte oder zu reinigende Wäsche, Gerichte von Lieferdiensten (z.B. eines Pizza- oder Sushi-Services), etc.) oder Gegenständen (z.B. Wertgegenstände, Gepäck, etc.) eingerichtet. Die Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet. Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein. Die Fachanlage kann beispielsweise als Paketfachanlage oder kombinierte Brief- und Paketfachanlage ausgebildet sein.

Jedes der Fächer ist beispielsweise mit einem jeweiligen Schloss versehen, um den Zugang von Benutzern zu den einzelnen Fächern der Fachanlage kontrollieren zu können. Das Schloss eines Fachs kann beispielsweise im oder am Fach angeordnet sein, beispielsweise an einer Tür (z.B. auch in Form einer Klappe) des Fachs. Wenn das Schloss nicht an der Tür angeordnet ist (also beispielsweise an einer Seitenwand des Fachs), wirkt es beispielsweise mit der Tür zusammen, indem beispielweise ein Riegel in eine Öffnung der Tür eingeführt bzw. wieder herausgezogen wird. Das Schloss eines Fachs kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür des Fachs geöffnet werden. Da das Schloss automatisch in die Verriegelungsposition zurückkehrt, kann eine Verriegelung des Fachs durch Schließen der Tür erzielt werden, beispielsweise in dem beim Schließen der Tür eine Fallenfunktion des Schlosses ausgenutzt wird.

Der Prozess zum Authentifizieren des Benutzers einer Fachanlage umfasst ein Erhalten bzw. Empfangen von einer oder mehreren Zugangsanforderungsinformationen des Benutzers und ein Authentifizieren des Benutzers auf Grundlage zumindest der einen oder mehreren erhaltenen bzw. empfangenen Zugangsanforderungsinformationen. Die Zugangsanforderungsinformationen des Benutzers werden beispielsweise durch mindestens eine als Authentifizierungsvorrichtung ausgebildete Vorrichtung des Backend-Systems von dem Mobilgerät des Benutzers und/oder von einer mit dem Backend-System verbundenen Datenschnittstelle einer Fachanlage erhalten.

Die Zugangsanforderungsinformationen werden von dem Benutzer bei der Authentisierung bereitgestellt. Die Bereitstellung der Zugangsanforderungsinformationen erfolgt, indem der Benutzer Daten in ein ihm zugeordnetes Mobilgerät und/oder in eine einer Fachanlage zugeordnete Eingabevorrichtung eingibt. Alternativ oder optional kann der Benutzer durch eine Interaktion mit dem Mobilgerät und/oder der Eingabevorrichtung der Fachanlage die Übermittlung der Zugangsanforderungsinformationen an das Backend-System veranlassen, um die Zugangsanforderungsinformationen dem Prozess zum Authentifizieren des Benutzers bereitzustellen.

Vorzugsweise übernimmt das Mobilgerät des Benutzers die Funktion einer Benutzerschnittstelle für die Fachanlage, so dass die Fachanlage besonders einfach ausgebildet sein kann. Die Bedienung der Fachanlage erfolgt dann beispielsweise durch das Mobilgerät, insbesondere durch eine darauf installierte App, die zum Zwecke der Authentisierung des Benutzers mit dem Backend-System kommuniziert und/oder in Form eines Relais den Datenaustausch zwischen dem Backend-System und der Fachanlage ermöglicht. Dazu kommuniziert die Fachanlage mit dem Mobilgerät über eine Nahbereichs-Datenkommunikationsverbindung (z.B. Bluetooth, NFC, RFID, WLAN, ZigBee, etc.) und muss dann insbesondere keine Fern-Datenkommunikationsverbindung (z.B. eine zellulare Mobilfunkverbindung) mit dem Backend-System einrichten können, da diese Funktionalität von dem Mobilgerät bereitgestellt wird.

Die von dem Benutzer bereitgestellten Zugangsanforderungsinformationen, die beim Prozess zum Authentifizieren erhalten werden, sind beispielsweise eine Benutzerkennung (oder eine anderweitige Kennung), wie die oben erwähnte Postnummer, und/oder ein Code (z.B. in Form eines Abholcodes) bzw. Passwort, wie die oben erwähnte mTAN. Alternativ oder optional wird zumindest ein Teil der Zugangsanforderungsinformationen - beispielsweise anstelle der Benutzerkennung - mittels Referenzierung einer auf dem Mobilgerät gespeicherten Token-Information bereitgestellt, die anlässlich einer vorherigen positiven Authentifizierung des Benutzers auf dem Mobilgerät gespeichert wurde. Alternativ oder optional enthalten die Zugangsanforderungsinformationen eine Sendungsreferenz, die beispielsweise bei einer jeweiligen Transportbeauftragung oder Einlegung einer Sendung in ein Fach einer Fachanlage individuell von der Fachanlage oder dem Backend-System elektronisch erzeugt wird. Die von dem Benutzer bereitgestellten Zugangsanforderungsinformationen können partiell oder vollständig dem Benutzer dauerhaft oder zumindest für einen Zeitraum zugeordnet sein, der sich über eine erfolgreiche Authentifizierung des Benutzers hinaus erstreckt. Alternativ oder optional sind die von dem Benutzer bereitgestellten Zugangsanforderungsinformationen nur für eine einmalige erfolgreiche Authentifizierung bzw. einen einmaligen Zugang zu einem Fach oder mehreren Fächern der von dem Benutzer aufgesuchten Fachanlage gültig, so dass nach einer erfolgreichen Authentifizierung des Benutzers eine Bereitstellung derselben Zugangsanforderungsinformationen durch den Benutzer nicht in einer erneuten erfolgreichen Authentifizierung des Benutzers resultiert.

Bei dem Prozess zum Authentifizieren des Benutzers einer Fachanlage wird geprüft, ob oder ob nicht die von dem Benutzer mittels Bereitstellung von Zugangsanforderungsinformationen behauptete Identität und/oder Zugangsberechtigung gültig ist. Die Zugangsanforderungsinformationen hat der Benutzer zuvor während seiner Authentisierung bereitgestellt, beispielsweise durch Eingabe seiner Benutzerkennung und eines ihm zuvor anlässlich einer (insbesondere gerade) erfolgten Sendungshinterlegung elektronisch übermittelten Abholcodes. Nur falls bei dem Prozess zum Authentifizieren des Benutzers durch die Prüfung die Gültigkeit der behaupteten Identität und/oder Zugangsberechtigung festgestellt worden ist, wird der Benutzer positiv authentifiziert bzw. zu einem Zugang zu einem oder mehreren Fächern der Fachanlage autorisiert. Bei dem Prozess zum Authentifizieren des Benutzers wird die Gültigkeit der zur Authentisierung bereitgestellten Zugangsanforderungsinformation(en) mittels Referenzierung gespeicherter Zugangsberechtigungsinformationen geprüft. Der Benutzer wird nur unter der Bedingung positiv authentifiziert und zum Zugang autorisiert, falls die Gültigkeit der bei der Authentisierung bereitgestellten Zugangsanforderungsinformation(en) verifiziert und bestätigt worden ist. Beispielsweise wird der Benutzer nur dann positiv bzw. erfolgreich authentifiziert, falls die von dem Benutzer bereitgestellte Zugangsanforderungsinformation mit einer für diesen Benutzer gespeicherten Zugangsberechtigungsinformation übereinstimmt oder mittels einer vorgegebenen Transformation auf diese abgebildet werden kann. Andernfalls, wenn bei der Prüfung die von dem Benutzer bereitgestellten Zugangsanforderungsinformationen als ungültig beurteilt worden sind, wird die Authentifizierung erfolglos bzw. mit einem negativen Ergebnis beendet. Das Ergebnis des vollständig durchgeführten Prozesses zum Authentifizieren des Benutzers ist derart, dass der Benutzer entweder - im Fall einer Authentifizierung mit positivem Ergebnis - authentifiziert ist oder - im Fall ohne Authentifizierung des Benutzers bzw. bei einem negativem Ergebnis- nicht authentifiziert ist.

Eine einen festgelegten Schwellenwert übersteigende Anzahl von durchgeführten Prozessen zum Authentifizieren des Benutzers ohne erfolgte Authentifizierung des Benutzers, also mit negativem Ergebnis, führt beispielsweise bei nachfolgend durchgeführten Prozessen zum Authentifizieren des Benutzers dazu, dass der Benutzer permanent, zumindest für eine vordefinierte Zeitspanne, beispielsweise mindestens 1 Stunde, bevorzugt 24 Stunden, oder bis zum Eintreten eines vordefinierten Ereignisses, wie beispielsweise einer Freischaltung des gesperrten Benutzers im Backend-System, nicht mehr authentifiziert werden kann. Der Schwellenwert kann benutzerspezifisch und/oder fachanlagenspezifisch festgelegt sein. Der Schwellenwert ist beispielsweise benutzerspezifisch derart festgelegt, dass im Backend-System ein Benutzer nach insgesamt 3 erfolglosen Authentifizierungen einen Sperreintrag erhält. Ist ein derartiger Sperreintrag im Backend-System für den Benutzer gesetzt, wird beispielsweise dem Benutzer ein erneuter Versuch einer Authentifizierung verweigert, wobei der Prozess zum Authentifizieren des Benutzers nicht gestartet wird oder vorzeitig ohne Authentifizierung terminiert wird. Der Schwellenwert ist beispielsweise fachanlagenspezifisch derart festgelegt, dass ein Prozess zum Authentifizieren eines Benutzers für eine vordefinierte Zeitspanne, beispielsweise mindestens 1 Stunde, nicht durchgeführt bzw. gestartet wird, falls zuvor eine festgelegte Anzahl von Authentifizierungen, die von einem oder mehreren Benutzern am Ort der Fachanlage initiiert wurden, ohne Authentifizierung eines Benutzers durchgeführt worden ist.

Bei dem Prozess zum Authentifizieren eines Benutzers einer Fachanlage gegenüber einem die Fachanlage verwaltenden Backend-System wird der Benutzer gegenüber dem Backend-System authentifiziert. Hierbei bezeichnet die Authentifizierung des Benutzers gegenüber dem Backend-System, dass die Prüfung, ob die von dem die Authentifizierung begehrenden Benutzer bereitgestellten Zugangsanforderungsinformationen gültig sind, auf Grundlage von Zugangsberechtigungsinformationen durchgeführt wird, die von dem Backend-System gespeichert und verwaltet werden. Die Prüfung der Gültigkeit der für die Authentifizierung bereitgestellten Zugangsanforderungsinformationen erfolgt beispielsweise durch das Backend-System unter Heranziehung der in dem Backend-System gespeicherten und verwalteten Zugangsberechtigungsinformationen. Die Authentifizierung des Benutzers gegenüber dem Backend-System bezeichnet im Sinne der Erfindung aber auch eine Prüfung der Zugangsanforderungsinformationen auf Grundlage einer Kopie oder Abbildung der in dem Backend-System gespeicherten Zugangsberechtigungsinformationen. Außerdem bezeichnet die Authentifizierung des Benutzers gegenüber dem Backend-System, dass das Backend-System an der jeweiligen Durchführung der Authentifizierung zumindest beteiligt ist, und dass das finale Ergebnis des Prozesses zum Authentifizieren des Benutzers - entweder mit einer positiven Authentifizierung des Benutzers oder ohne Authentifizierung des Benutzers - allein durch das Backend-System bestimmt wird.

Ob oder ob nicht der Prozess zum Authentifizieren des Benutzers überhaupt durchgeführt wird, hängt bei dem Verfahren der Erfindung von dem Ergebnis einer Näheprüfung und/oder dem Ergebnis einer Belegungsprüfung ab.

Das Ergebnis der Näheprüfung gibt an, ob oder ob nicht sich das Mobilgerät des Benutzers am Ort (insbesondere am gegenwärtigen Ort) der (beispielsweise stationär aufgestellten) Fachanlage befindet. Das Ergebnis der Näheprüfung spezifiziert somit, dass sich das Mobilgerät des Benutzers entweder räumlich nah genug zu dem gegenwärtigen Ort der Fachanlage befindet oder zu weit entfernt zu diesem Ort der Fachanlage ist. Die Näheprüfung ergibt, dass sich das Mobilgerät am Ort der Fachanlage befindet, falls das Mobilgerät bzw. die darauf ausgeführte App die Fachanlage, die von dem Benutzer aufgesucht wird, detektiert und/oder die Fachanlage das Mobilgerät detektiert. Die für die Näheprüfung eingesetzte Detektion der Nähe von Mobilgerät und Fachanlage kann auf einer drahtlosen und/oder drahtgebundenen Verbindung zwischen dem Mobilgerät und der Fachanlage basieren, wobei das Zustandekommen dieser Verbindung ein notwendiges Kriterium für das Vorliegen der Nähe ist. Die Detektion kann beispielsweise das Zustandekommen einer Nahfeldkopplung, beispielsweise einer induktiven oder kapazitiven Kopplung, zwischen dem Mobilgerät und der Fachanlage als notwendiges Kriterium für das Vorliegen der Nähe erfordern, oder das Zustandekommen einer Funkverbindung zwischen dem Mobilgerät und der Fachanlage, beispielsweise mit zumindest einem vordefinierten Signal-zu-Rausch-Verhältnis oder einem vordefinierten Signal-zu-Rausch-und-Interferenzverhältnis.

Bei der beispielhaften Ausführungsform der erfindungsgemäßen Verfahrens kann die Detektion der Nähe von Mobilgerät des Benutzers und der Fachanlage für die Näheprüfung unter Verwendung einer Schnittstelle des Mobilgerätes für eine Nahbereich-Datenkommunikationsverbindung, wie beispielweise Bluetooth, NFC (Near Field Communication), WLAN (Wireless Local Area Network) oder ZigBee, um nur einige Beispiele zu nennen, erfolgen. Für die Durchführung dieser Detektion ist die Fachanlage ebenfalls mit einer Schnittstelle für eine Nahbereich-Datenkommunikationsverbindung versehen, so dass zwischen diesen Schnittstellen des Mobilgerätes und der Fachanlage eine Nahbereich-Datenkommunikationsverbindung etablierbar ist. Nur unter der Bedingung, dass die Nahbereich-Datenkommunikationsverbindung zwischen der Fachanlage und dem Mobilgerät etablierbar oder etabliert ist, wird das Vorliegen einer ausreichenden Nähe zwischen Mobilgerät und Fachanlage detektiert, und ergibt die Näheprüfung, dass sich das Mobilgerät am Ort der Fachanlage befindet. Die angestrebte maximal zulässige Entfernung zwischen dem Mobilgerät und der Fachanlage, damit das Vorliegen einer ausreichenden Nähe zwischen Mobilgerät und Fachanlage detektiert wird, liegt beispielsweise im Bereich von weniger als 100 Metern, insbesondere von weniger als 10 Metern.

Alternativ oder optional kann als Detektion für die Näheprüfung beispielsweise vorgesehen sein, dass das Mobilgerät die Fachanlage optisch detektiert, beispielsweise indem mittels der auf dem Mobilgerät ausgeführten App und einer Kamera des Mobilgerätes ein auf einem Bildschirm der Fachanlage angezeigtes Bildschirmbild oder ein auf der Fachanlage angebrachtes Bild erfasst und verarbeitet wird. Alternativ oder optional kann als Detektion für die Näheprüfung beispielsweise vorgesehen sein, dass die Fachanlage das Mobilgerät optisch detektiert, beispielsweise indem die Fachanlage mit einer Kamera oder einem Laserscanner ein von der App auf dem Mobilgerät angezeigtes Bildschirmbild oder eine Bildsequenz oder ein auf dem Mobilgerät angebrachtes Bild erfasst und verarbeitet. Bei dem Bildschirmbild oder dem Bild kann es sich beispielsweise um einen Barcode handeln, insbesondere einen QR-Code.

Bei der beispielhaften Ausführungsform des erfindungsgemäßen Verfahrens kann die Näheprüfung unter der Bedingung, dass das Backend-System eine von der Fachanlage verschlüsselte Nachricht entschlüsseln kann bzw. entschlüsselt hat und/oder dass das Backend-System die Integrität und Authentizität einer von der Fachanlage mit einer Signatur versehenen Nachricht festgestellt hat, das Ergebnis liefern, dass sich das Mobilgerät am Ort der Fachanlage befindet. Für die Prüfung der Nähe von Mobilgerät und Fachanlage wird das Mobilgerät verwendet, um die verschlüsselte (bzw. mit einer Signatur versehene) Nachricht von der Fachanlage an das Backend-System zu übertragen. Die von der Fachanlage verschlüsselte (bzw. mit einer Signatur versehene) Nachricht wird beispielsweise zunächst an das sich am Ort der Fachanlage befindende Mobilgerät übertragen, das über eine Nahbereich-Datenkommunikationsverbindung mit der Fachanlage verbunden ist, und wird anschließend von dem Mobilgerät an das Backend-System übertragen, das mit dem Mobilgerät beispielsweise über eine Fern-Datenkommunikationsverbindung eines zellularen Mobilfunknetzes (also beispielsweise GSM, E-GSM, UMTS, LTE oder 5G) verbunden ist. Die Verschlüsselung kann beispielsweise auf einer symmetrischen oder asymmetrischen Verschlüsselung beruhen, wobei beispielweise ein öffentlicher Schlüssel eines asymmetrischen Schlüsselpaars an der Fachanlage vorhanden ist und der zugehörige private Schlüssel dem Backend-System bekannt ist. Die Signatur kann beispielsweise durch die Vornahme kryptographischer Operationen auf die Nachricht unter Verwendung eines Schlüssels erzeugt werden (beispielsweise als verschlüsselter Hashwert über die Nachricht, oder als kryptographischer Hashwert (z.B. als HMAC oder CMAC) über die Nachricht), wobei dieser Schlüssel sowohl in der Fachanlage als auch im Backend-System vorhanden ist und somit die Signatur am Backend-System erneut berechnet und mit der von der Fachanlage erzeugten Signatur verglichen werden kann. Bei Übereinstimmung beider Signaturen wird dann von der Integrität und Authentizität der Nachricht ausgegangen.

Bei der beispielhaften Ausführungsform des erfindungsgemäßen Verfahrens kann das Ergebnis der Näheprüfung nicht allein mittels einer durch das Mobilgerät eigenständig durchführbaren Positionsermittlung ermittelt werden. Dies bedeutet, dass das Ergebnis der Näheprüfung anders bestimmt wird als durch eine bloße Ermittlung der aktuellen Geoposition, wie beispielsweise geographische Koordinaten, des Mobilgeräts und einen Abgleich der ermittelten Geoposition mit der bekannten Geoposition der von dem Benutzer frequentierten Fachanlage. Es wird bevorzugt, dass das Ergebnis der Näheprüfung unabhängig von einer durch das Mobilgerät eigenständig durchführbaren Positionsermittlung ist. Bevorzugt wird das Ergebnis der Näheprüfung ohne Verwendung einer in dem Mobilgerät integrierten Einrichtung zur Geopositionsermittlung ermittelt.

Ob oder ob nicht der Prozess zum Authentifizieren des Benutzers durchgeführt wird, hängt bei einigen Ausführungsformen der Erfindung von dem Ergebnis einer Belegungsprüfung ab.

Das Ergebnis der Belegungsprüfung gibt an, ob oder ob nicht die von dem Benutzer aufgesuchte Fachanlage mindestens eine dem Benutzer zugeordnete Sendung enthält, die in einem oder mehreren Fächern der Fachanlage für den Benutzer bereitgestellt ist. Bei den Ausführungsbeispielen der Erfindung mit Berücksichtigung des Ergebnisses der Belegungsprüfung wird der Prozess zum Authentifizieren des Benutzers nur unter der notwendigen Bedingung ausgeführt, dass in mindestens einem der Fächer der Fachanlage überhaupt eine dem Benutzer zugeordnete Sendung bereitgestellt ist. Die Prüfung durch das Backend-System, ob von dem Benutzer bereitgestellte Zugangsanforderungsinformationen gültig sind, unterbleibt, falls die Belegungsprüfung ergeben hat, dass die Fachanlage keine Sendung enthält, die dem die Authentifizierung begehrenden Benutzer zugeordnet ist.

In einigen Ausführungsformen wird die aktuelle Belegung der Fächer einschließlich der aktuellen Benutzer-Fach-Zuordnung für eine Fachanlage oder mehrere Fachanlagen ausschließlich zentral durch das Backend-System verwaltet und gespeichert. In anderen Ausführungsformen wird die aktuelle Belegung der Fächer einschließlich der aktuellen Benutzer-Fach-Zuordnung zentral in dem Backend-System und zugleich - unter Steuerung durch das Backend-System - lokal durch die jeweilige Fachanlage selbst verwaltet und gespeichert.

Eine jeweilige Durchführung einer Authentifizierung eines Benutzers einer Fachanlage, also die Prüfung, ob oder ob nicht die von dem Benutzer bereitgestellte Zugangsanforderungsinformation korrekt und gültig ist, und ob - im Fall einer erfolgreichen Authentifizierung bzw. bei einem positiven Authentifizierungsergebnis - dem Benutzer Zugang zu einem oder mehreren Fächern einer Fachanlage gewährt wird, erfolgt bei denen im Rahmen dieser Anmeldung betrachteten Fachanlagen immer derart, dass das Backend-System an der jeweiligen Durchführung der Authentifizierung zumindest beteiligt ist und das finale Ergebnis der Authentifizierung entweder als positiv oder als negativ bestimmt.

Bei der beispielhaften Ausführungsform des erfindungsgemäßen Verfahrens können das Ergebnis der Näheprüfung und das Ergebnis der Belegungsprüfung kaskadiert als die notwendigen Bedingungen berücksichtigt werden, die erfüllt sein müssen, damit der Prozess zum Authentifizieren des Benutzers durchgeführt wird. Dies entspricht einer kaskadierten Ausführung der Näheprüfung und der Belegungsprüfung. Nur unter der Bedingung, dass das Ergebnis der zuerst berücksichtigten bzw. ausgeführten Prüfung positiv ist, wird die andere Prüfung ausgeführt bzw. das Ergebnis der anderen Prüfung berücksichtigt. Falls die zuerst berücksichtigte bzw. ausgeführte Prüfung negativ ist, unterbleibt die nachfolgend anstehende Prüfung. Beispielsweise wird die Belegungsprüfung nur ausgeführt bzw. deren Ergebnis berücksichtigt, wenn zuvor die Näheprüfung ergeben hat, dass sich das Mobilgerät des Benutzers am Ort der Fachanlage befindet. Im Fall einer zentralen Speicherung und Verwaltung der aktuellen Belegung der Fächer mit der aktuellen Empfänger-Fach-Zuordnung durch das Backend-System bietet sich der Vorteil, dass nur im Fall einer positiven Näheprüfung, wenn sich also das Mobilgerät am Ort der Fachanlage befindet, ein Zugriff auf im Backend-System gespeicherte Daten erforderlich ist. Im umgekehrten Fall, wenn die Belegungsprüfung die zuerst ausgeführte Prüfung ist, bietet sich der Vorteil, dass die Nahbereich-Datenkommunikationsverbindung zwischen dem Mobilgerät und der Fachanlage nur bei einem positiven Ergebnis der zuerst berücksichtigten Belegungsprüfung etabliert werden muss. Dadurch wird eine kostengünstige Realisierung der Schnittstelle der Fachanlage für die Nahbereich-Datenkommunikationsverbindung ermöglicht. Zudem wird unterbunden, dass Angreifer eine jeweilige Fachanlage durch permanente Anfragen blockieren können.

Bei der beispielhaften Ausführungsform des erfindungsgemäßen Verfahrens kann das Ergebnis der Belegungsprüfung auf Grundlage einer oder mehrerer von dem Mobilgerät bereitgestellten Zugangsanforderungsinformationen durch das Backend-System festgelegt werden. Beispielsweise empfängt das Backend-System von dem Mobilgerät eine Benutzerkennung des die Authentifizierung begehrenden Benutzers oder eine dem Benutzer zugeordnete (und ggf. das Mobilgerät identifizierende) Token-Information, die bei einer zuletzt erfolgten erfolgreichen Authentifizierung des Benutzers (beispielsweise von dem Backend-System) erzeugt und seitdem auf dem Mobilgerät gespeichert wird, über eine Fern-Datenkommunikationsverbindung, beispielsweise ein zellulares Mobilfunknetz, und prüft anschließend, ob für diesen Benutzer eine Sendung in einer Fachanlage bereitgestellt ist. Diese Belegungsprüfung kann beispielsweise nur spezifisch für eine Fachanlage erfolgen, die der Benutzer mittels einer App auf seinem Mobilgerät ausgewählt hat, und/oder für die die Näheprüfung ergeben hat, dass sich das Mobilgerät am Ort dieser Fachanlage befindet. Bei dieser beispielhaften Ausführungsform ist für die Prüfung, ob der Prozess zum Authentifizieren des Benutzers durchgeführt werden soll, vorzugsweise kein Datenaustausch zwischen der Fachanlage und dem Backend-System erforderlich.

Bei der beispielhaften Ausführungsform des erfindungsgemäßen Verfahrens kann eine Datenkommunikationsverbindung zwischen dem Backend-System und der Fachanlage mittels Weiterleitung durch das Mobilgerät betrieben werden; das Mobilgerät fungiert dann also als Relais. Bevorzugt besteht ohne Weiterleitung durch das Mobilgerät keine direkte Datenkommunikationsverbindung zwischen dem Backend-System und der Fachanlage, so dass ein unidirektionaler oder bidirektionaler Datenaustausch zwischen dem Backend-System und der Fachanlage ohne das mit dem Backend-System und der Fachanlage jeweils zum Datenaustausch gekoppelte Mobilgerät nicht möglich ist. Das Mobilgerät empfängt Daten von der Fachanlage und übertragt Daten an die Fachanlage über eine zwischen dem Mobilgerät und der Fachanlage etablierte Nahbereich-Datenkommunikationsverbindung, wie beispielsweise Bluetooth, NFC, RFID, WLAN oder ZigBee. Außerdem empfängt das Mobilgerät Daten von dem Backend-System und übertragt Daten an das Backend-System über eine zwischen dem Mobilgerät und dem Backend-System etablierte Fern-Datenkommunikationsverbindung eines zellularen Mobilfunknetzes (also beispielsweise GSM, E-GSM, UMTS, LTE oder 5G). Die durch das Mobilgerät erfolgende Weiterleitung der Daten von dem Backend-System an die Fachanlage und in umgekehrter Richtung wird beispielsweise durch eine auf dem Mobilgerät ausgeführte bzw. laufende Software, insbesondere in Form einer App, gesteuert. Die Etablierung der Nahbereich-Datenkommunikationsverbindung zwischen der Fachanlage und dem Mobilgerät und die Etablierung der Fern-Datenkommunikationsverbindung zwischen dem Mobilgerät und dem Backend-System werden beispielsweise ebenfalls durch die auf dem Mobilgerät ausgeführte Software initiiert und gesteuert.

Bei der beispielhaften Ausführungsform des erfindungsgemäßen Verfahrens kann die oben beschriebene Datenkommunikationsverbindung zwischen dem Backend-System und der Fachanlage nur unter der Bedingung etabliert und betrieben werden, dass die Näheprüfung ergeben hat, dass sich das Mobilgerät am Ort der Fachanlage befindet, und/oder dass die Belegungsprüfung ergeben hat, dass die Fachanlage mindestens eine dem Benutzer zugeordnete Sendung enthält.

Die für die Näheprüfung verwendete Schnittstelle von Mobilgerät und Fachanlage für eine Nahbereichs-Datenkommunikationsverbindung kann dabei dieselbe Schnittstelle sein wie die Schnittstelle für die Nahbereichs-Datenkommunikationsverbindung, die bei der Verwendung des Mobilgeräts als weiterleitende Einheit (insbesondere als Relais) zwischen dem Backend-System und der Fachanlage zum Einsatz kommt (was insbesondere eine kostengünstigere und kompaktere Implementierung des Mobilgeräts erlaubt), oder kann sich von dieser Schnittstelle unterscheiden (was mehr Freiheitsgrade beim Abtausch zwischen Sicherheit (möglichst geringe Reichweite) und Datenübertragungskapazität (möglichst hoch) erlaubt). Beispielsweise kann die Näheprüfung auf NFC beruhen (geringe Reichweite und damit hohe Sicherheit bei der Näheprüfung), während die Weiterleitung auf WLAN beruht (hohe Datenübertragungskapazität).

Es wird zudem bevorzugt, dass die Datenkommunikationsverbindung zwischen dem Backend-System und der Fachanlage nur unter der notwendigen Bedingung etabliert und betrieben wird, dass der Benutzer auf Grundlage seiner bereitgestellten Zugangsanforderungsinformationen erfolgreich durch das Backend-System authentifiziert worden ist. Nur im Fall einer erfolgreichen Authentifizierung des Benutzers autorisiert das Backend-System - über die anlässlich der Autorisierung des Benutzers etablierte Datenkommunikationsverbindung, bevorzugt mit Weiterleitung durch das Mobilgerät- die Fachanlage mittels geeigneter Steuerbefehle zum Entriegeln bzw. Öffnen mindestens eines der dem Benutzer zugeordneten Fächer diese Fachanlage.

Bei der beispielhaften Ausführungsform des erfindungsgemäßen Verfahrens kann eine hinsichtlich der Näheprüfung und/oder der Belegungsprüfung zusätzliche oder alternative notwendige Bedingung für die Durchführung des Prozesses zum Authentifizieren des Benutzers sein, dass eine Authentifizierungsanfrage, die den Prozess zum Authentifizieren des Benutzers auslösen soll, aufgrund eines Zählers nicht als verdächtig eingestuft worden ist. Der Zähler erfasst beispielsweise, wie oft innerhalb eines vordefinierten oder dynamisch nach einer vordefinierten Regel angepassten Zeitintervalls eine Authentifizierungsanfrage, die den Prozess zum Authentifizieren des Benutzers auslösen soll (beispielsweise durch zumindest teilweise Bereitstellung der Zugangsanforderungsinformation, beispielsweise der Benutzerkennung), gestellt wurde, beispielsweise an das Backend-System. Überschreitet der Zähler einen vordefinierten oder dynamisch nach einer vordefinierten Regel angepassten Schwellwert, wird beispielsweise entschieden, dass die Authentifizierungsanfrage als verdächtig einzustufen ist, da sie zu häufig innerhalb des Zeitintervalls erfolgt ist. Dies führt dazu, dass der Prozess zum Authentifizieren des Benutzers nicht durchgeführt wird. Der Zähler kann spezifisch nur für einen jeweiligen Benutzer sein (also unabhängig von der jeweiligen Fachanlage), oder kann spezifisch für eine Kombination aus einem jeweiligen Benutzer und einer jeweiligen Fachanlage sein, oder kann nur spezifisch für eine Fachanlage (also benutzerunabhängig) sein.

Bei der beispielhaften Ausführungsform des erfindungsgemäßen Verfahrens kann das Verfahren ferner ein Erzeugen eines temporären Sitzungsschlüssels, Verschlüsseln des erzeugten temporären Sitzungsschlüssels und Übertragen des verschlüsselten Sitzungsschlüssels an das Backend-System umfassen. Die Erzeugung und die Verschlüsselung des temporären Sitzungsschlüssels erfolgt beispielsweise durch die Fachanlage. Der temporäre Sitzungsschlüssel wird durch die Fachanlage beispielsweise zu dem Zeitpunkt bzw. Ereignis erzeugt, wenn zwischen der Fachanlage und dem Mobilgerät des Benutzers eine Nahbereich-Datenkömmunikationsverbindung, beispielsweise mit Bluetooth, NFC, RFID, WLAN oder ZigBee, etabliert wird, wie beispielsweise bei der Näheprüfung. Der temporäre Sitzungsschlüssel wird beispielsweise als Zufallswert erzeugt. Der temporäre Sitzungsschlüssel ist als Schlüsselwert für eine Datenkommunikation zwischen dem Backend-System und der Fachanlage mit Weiterleitung durch das Mobilgerät und mit Ende-zu-Ende-Verschlüsselung zwischen dem Backend-System und der Fachanlage vorgesehen. Der Sitzungsschlüssel ist temporär gültig, und die Gültigkeit endet nach dem Verstreichen einer vorgegebenen Zeitdauer, beispielsweise bei Überschreiten einer maximalen Zeitspanne ohne Datenaustausch zwischen der Fachanlage und dem Backend-System, wie beispielsweise 2 Minuten, oder nach Abschluss des Prozesses zum Authentifizieren des Benutzers, um nur einige Beispiele zu nennen. Der temporäre Sitzungsschlüssel wird bevorzugt mittels asymmetrischer kryptographischer Verschlüsselung derart verschlüsselt, dass ein der Fachanlage bekannter, sogenannter öffentlicher Schlüssel des Backend-Systems zur Verschlüsselung des temporären Sitzungsschlüssels verwendet wird. Der verschlüsselte temporäre Sitzungsschlüssel ist mit Hilfe eines sogenannten privaten Schlüssels des Backend-Systems entschlüsselbar. Die Übertragung des verschlüsselten Sitzungsschlüssels erfolgt bevorzugt von der Fachanlage an das Mobilgerät über eine Nahbereich-Datenkommunikationsverbindung und anschließend von dem Mobilgerät an das Backend-System über eine Fern-Datenkommunikationsverbindung, beispielsweise über ein zellulares Mobilfunknetz.

Unter dem Begriff des öffentlichen Schlüssels des Backend-Systems, welcher der Fachanlage bekannt ist, wird verstanden, dass dieser öffentliche Schlüssel mindestens einer der von dem Backend-System verwalteten Fachanlagen bekannt ist. Der öffentliche Schlüssel darf aber nur den Fachanlagen selbst bekannt sein, da sich andernfalls ein Angreifer mit Kenntnis dieses öffentlichen Schlüssels als Fachanlage ausgegeben kann. Der private Schlüssel des Backend-Systems wird in einer Vorrichtung des Backend-Systems mit strengen Schutzmaßnahmen gegen den Zugriff Unbefugter gespeichert. Der öffentliche Schlüssel des Backend-Systems wird zum Verschlüsseln von Nachrichten verwendet, die nur mit dem privaten Schlüssel des Backend-Systems entschlüsselbar sind. Gemäß dem Konzept der asymmetrischen Verschlüsselung ist der private Schlüssel derart definiert, dass er aus dem öffentlichen Schlüssel gar nicht oder nur mit extrem hohen Zeit- und Berechnungsaufwand berechnet werden kann.

Um den Zugang zu dem öffentlichen Schlüssel des Backend-Systems für Angreifer zu erschweren, ist der öffentliche Schlüssel des Backend-Systems nicht allgemein bekannt oder veröffentlicht, sondern ist beispielsweise in die Firmware der Fachanlage integriert. Für jede Firmware-Aktualisierung wird beispielsweise ein neues asymmetrisches Schlüsselpaar erzeugt, mit Integration des öffentlichen Schlüssels des Backend-Systems in der Firmware, wodurch eine regelmäßige Ersetzung des privaten Schlüssels im Backend-System und des öffentlichen Schlüssels in allen durch das Backend-System verwalteten Fachanlagen erzwungen wird, und somit die Sicherheit vor Angriffen mit älteren, möglicherweise bekannt gewordenen Schlüsseln gesteigert wird. Sollte ein externer Entwicklungsdienstleister an der Firmware-Entwicklung beteiligt sein, so erhält dieser vorzugsweise nur Testversionsschlüssel, die im Alltagsbetrieb der Fachanlagen und des Backend-Systems, also außerhalb einer begrenzten Testumgebung, wirkungslos sind. Nach der Weitergabe der erstellten Firmware von dem Entwicklungsdienstleister an den Betreiber des Backend-Systems ersetzt der Betreiber die Testversionsschlüssel gegen wirksame bzw. produktive Schlüssel. Ferner kann die Sicherheit durch ein Challenge-Response-Konzept gesteigert werden, das vorsieht, dass das Backend-System eine Challenge-Nachricht bzw. Aufforderungsnachricht mit einem integrierten, möglicherweise verschlüsselten Zeitstempel an die Fachanlage sendet, und dass die Fachanlage als Response-Nachricht bzw. Antwortnachricht den Zeitstempel zurück an das Backend-System schickt. Es kann auch eine Schlüsselverwaltung derart vorgesehen sein, dass jede Fachanlage mit einer individuellen asymmetrischen Verschlüsselung arbeitet (die beispielsweise ebenfalls mit jedem Firmware-Update geändert wird). Für die asymmetrische Verschlüsselung kann beispielsweise das RSA-Verfahren mit einem 2048-Bit-Schlüsselwert verwendet werden.

Bei der beispielhaften Ausführungsform des erfindungsgemäßen Verfahrens kann das Verfahren zudem ein Empfangen eines verschlüsselten Sitzungsschlüssels von der Fachanlage, Entschlüsseln des verschlüsselten Sitzungsschlüssels und Ende-zu-Ende-Verschlüsseln - mit dem entschlüsselten Sitzungsschlüssel - einer Datenkommunikation zwischen dem Backend-System und der Fachanlage umfassen. Der verschlüsselte Sitzungsschlüssel ist bevorzugt ein mittels asymmetrischer Verschlüsselung verschlüsselter Schlüsselwert. Der verschlüsselte Sitzungsschlüssel ist beispielsweise ein Sitzungsschlüssel, der von der Fachanlage mit einem öffentlichen Schlüssel des Backend-Systems verschlüsselt worden und anschließend an das Backend-System übertragen worden ist, wie im obigen Abschnitt bereits erläutert. Der empfangene verschlüsselte Sitzungsschlüssel wird dann von dem Backend-System mit dem privaten Schlüssel des Backend-Systems zu einem entschlüsselten Sitzungsschlüssel entschlüsselt. Mit dem entschlüsselten Sitzungsschlüssel werden Daten einer Datenkommunikation zwischen dem Backend-System und der Fachanlage (die beispielsweise dem Übertragen von Steuer- und/oder Statusinformation dient, beispielsweise von Befehlen zum Öffnen von einem oder mehreren bestimmten Fächern der Fachanlage) Ende-zu-Ende-verschlüsselt. Für diese Ende-zu-Ende-Verschlüsselung der unidirektionalen oder bidirektionalen Datenkommunikation zwischen dem Backend-System und der Fachanlage wird bevorzugt eine symmetrische Verschlüsselung eingesetzt, bei das Backend-System und die Fachanlage die Nachrichten mit dem entschlüsselten Sitzungsschlüssel verschlüsseln und entschlüsseln. Als Verfahren für die symmetrische Verschlüsselung wird beispielsweise AES (Advanced Encryption Standard) mit einer Schlüssellänge von 256 Bit eingesetzt. Der Sitzungsschlüssel ist temporär gültig, und die Gültigkeit endet nach dem Verstreichen einer vorgegebenen Zeitdauer, beispielsweise bei Überschreiten einer maximalen Zeitspanne ohne Datenaustausch zwischen dem Backend-System und der Fachanlage, wie beispielsweise 2 Minuten, oder nach Abschluss des Prozesses zum Authentifizieren des Benutzers, um nur einige Beispiele zu nennen. Die Datenkommunikation mit der Ende-zu-Ende-Verschlüsselung zwischen dem Backend-System und der Fachanlage erfolgt bevorzugt mit Weiterleitung über das Mobilgerät, das unter Steuerung einer auf dem Mobilgerät ausgeführten App Daten von dem Backend-System empfängt und diese Daten an die Fachanlage überträgt und/oder Daten von der Fachanlage empfängt und diese an das Backend-System überträgt. Die Ende-zu-Ende-Verschlüsselung zwischen dem Backend-System und der Fachanlage und die bloße Weiterleitung der verschlüsselten Nachrichten über das Mobilgerät sichern die Integrität, Vertraulichkeit und Verbindlichkeit der zwischen dem Backend-System und der Fachanlage ausgetauschten Nachrichten selbst dann, falls die Nahbereich-Datenkommunikationsverbindung zwischen der Fachanlage und dem Mobilgerät, die auf dem Mobilgerät ausgeführte App, das Mobilgerät und/oder die Fern-Datenkommunikationsverbindung zwischen dem Mobilgerät und dem Backend-System angreiferseitig manipuliert worden sind. Durch die zeitlich begrenzte Gültigkeit des zur Verschlüsselung und Entschlüsselung verwendeten Sitzungsschlüssels wird sichergestellt, dass angreiferseitig mitgeschnittene und zu einem späteren Zeitpunkt wiederholt gesendete Nachrichten wirkungslos verfallen.

Bei der beispielhaften Ausführungsform des erfindungsgemäßen Verfahrens kann das Verfahren ein Erzeugen einer dem Benutzer zugeordneten Token-Information und Ausgeben der erzeugten Token-Information an das Mobilgerät zur Speicherung für einen zukünftigen Prozess zum Authentifizieren des Benutzers unmfassen. Diese Schritte werden beispielsweise durch das Backend-System ausgeführt. Die Token-Information ist eine kryptografische Information, deren Daten bei einer erfolgreichen Authentifizierung eines Benutzers erzeugt werden. Die Token-Information enthält zumindest einen Teil, aber beispielsweise nicht sämtliche der Zugangsanforderungsinformationen (insbesondere keinen Abholcode bzw. keine mTAN), die ein Benutzer zur Authentifizierung gegenüber dem Backend-System bereitstellen muss, und wird beispielsweise derart erzeugt, dass sie dem authentifizierten Benutzer zugeordnet ist. Als den authentifizierten Benutzer identifizierende Token-Information enthält die Token-Information als Teil der Zugangsanforderungsinformationen beispielsweise die Benutzerkennung des Benutzers, wie beispielsweise die Postnummer des eingangs erläuterten Packstation-Konzeptes der Anmelderin. Außerdem enthält die Token-Information Sicherheitsdaten, die beispielsweise an das die Token-Information speichernde Mobilgerät, an den Installationszeitpunkt und/oder die Version der auf dem Mobilgerät ausgeführten App, und/oder an den Erzeugungszeitpunkt der Token-Information gekoppelt sind. Die Token-Information enthält beispielsweise als Sicherheitsdaten eine Information zum Identifizieren des Mobilgerätes, beispielsweise eine Seriennummer des Mobilgerätes, und/oder die IMEI (International Mobile Station Equipment Identity) eines Smartphones. Die Token-Information wird nur unter der notwendigen Bedingung erzeugt, beispielsweise durch das Backend-System, dass der Prozess zum Authentifizieren des Benutzers erfolgreich, also mit einer Authentifizierung des Benutzers, abgeschlossen worden ist. Die erzeugte Token-Information wird an das Mobilgerät ausgegeben, beispielsweise über eine Fern-Datenkommunikationsverbindung, wie eine zellulare Mobilfunkdatenverbindung, zwischen dem Backend-System und dem Mobilgerät. Die Token-Information wird unter der Steuerung der auf dem Mobilgerät ausgeführten App in einem elektronischen Speicher des Mobilgeräts als Daten derart gespeichert, dass die Token-Information anlässlich einer nachfolgenden Authentisierung des Benutzers von der App aus dem Speicher ausgelesen werden kann.

Bei der beispielhaften Ausführungsform des erfindungsgemäßen Verfahrens kann das Verfahren ein Empfangen einer einer vorherigen erfolgreichen Authentifizierung des Benutzers zugeordneten Token-Information von dem Mobilgerät, Prüfen der empfangenen Token-Information auf Gültigkeit, und Lockern oder Aufheben einer Begrenzung, für den durch die gültige Token-Information spezifizierten Benutzer, einer maximalen Anzahl von mit negativem Authentifizierungsergebnis durchführbaren Prozessen zum Authentifizieren des Benutzers, umfassen. Die auf dem Mobilgerät gespeicherte Token-Information, die wie oben dargestellt nur unter der notwendigen Bedingung einer vorherigen erfolgreichen Authentifizierung des Benutzers erzeugt worden ist, wird beispielsweise von dem Backend-System über eine Fern-Datenkommunikation zwischen dem Mobilgerät und dem Backend-System, beispielsweise eine zellulare Mobilfunkdatenverbindung, empfangen. Anschließend wird die empfangene Token-Information beispielsweise durch das Backend-System auf Grundlage der in dem Backend-System gespeicherten und verwalteten Zugangsberechtigungsinformationen, die beim Erzeugen der Token-Information um die oben erwähnten Sicherheitsdaten erweitert wurden, auf ihre Gültigkeit geprüft. Falls die Prüfung ergibt, dass die empfangene Token-Information gültig ist, wird beispielsweise durch das Backend-System eine Begrenzung einer maximalen Anzahl von mit negativem Authentifizierungsergebnis durchführbaren Prozessen zum Authentifizieren des Benutzers gelockert oder aufgehoben. Im Fall einer gültigen Token-Information lässt das Backend-System beispielsweise eine höhere Anzahl fehlgeschlagener Authentifizierungsversuche als ohne gültige Token-Information zu, bevor das Backend-System weitere Authentifizierungsversuche des Benutzers automatisch ablehnt oder eine zeitbasierte Sperrung des Benutzers realisiert. Wenn beispielsweise das Backend-System eine gültige Token-Information, die die Benutzerkennung enthält und daher den Benutzer identifiziert, von dem Mobilgerät erhält, sperrt das Backend-System den Benutzer erst nach einer Eingabe bzw. Bereitstellung von beispielsweise 10 ungültigen Abholcodes (als noch von dem Benutzer bereitzustellende Zugangsanforderungsinformation) anstelle einer Sperrung nach beispielsweise 3 ungültigen Abholcodes ohne Bereitstellung einer gültigen Token-Information. Dadurch wird der Benutzerkomfort für diejenigen Benutzer, die bereits einmal erfolgreich authentifiziert worden sind und daher als in einem gewissen Umfang als vertrauenswürdig gelten, deutlich erhöht.

Die Übertragung der Token-Information von dem Mobilgerät an das Backend-System wird beispielsweise durch eine auf dem Mobilgerät ausgeführte App (oder eine anderweitige Software) in Abhängigkeit von einer Bedienung der App durch den Benutzer initiiert. Falls die auf dem Mobilgerät ausgeführte App die auf dem Mobilgerät gespeicherte Token-Information des Benutzers abrufen kann, verlangt die App von dem Benutzer nur eine Eingabe eines Teils der ohne gespeicherte Token-Information erforderlichen Zugangsanforderungsinformationen. Beispielsweise muss der Benutzer, dessen Token-Information in dem Mobilgerät gespeichert ist und von der App ausgelesen worden ist, nicht mehr seine Benutzerkennung, so wie beispielsweise die Postnummer, sondern lediglich einen gültigen Abholcode, so wie beispielsweise die mTAN, in eine Eingabeschnittstelle des Mobilgeräts eingeben, um für einen Zugang zu einem Fach der Fachanlage authentifiziert (und damit autorisiert) zu werden. Zudem kann die App derart ausgestaltet sein, dass sie dem Benutzer, dessen Token-Information auf dem Mobilgerät für die App abrufbar gespeichert ist, zusätzliche Fachanlagen-bezogene Informationsdienste anbietet. Beispielsweise ist die App derart ausgestaltet, dass der Benutzer durch Bedienung der App ohne Eingabe irgendeiner Zugangsanforderungsinformation durch den Benutzer selbst (insbesondere unter der Annahme, dass der Benutzer zu diesem Zeitpunkt keinen Zugang zu einem Fach der Fachanlage begehrt) eine Übersicht über seine Sendungen mit zugeordneten Fachanlagen von dem Backend-System anfordern kann, falls die dem Benutzer zugeordnete Token-Information auf dem Mobilgerät gespeichert und für die App auslesbar ist. Insgesamt ermöglicht die Bereitstellung der Token-Information eine Steigerung des Komforts und der Sicherheit für den Benutzer, sofern der Benutzer zuvor schon einmal durch das Backend-System authentifiziert worden ist.

Die vorliegende Anmeldung offenbart wie bereits erwähnt ferner:
- Ein Computerprogramm, umfassend Programmanweisungen, die einen Prozessor zur Ausführung und/oder Steuerung der beispielhaften Ausführungsform des erfindungsgemäßen Verfahrens veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein. In dem Backend-System, in jeder Fachanlage und in jedem Mobilgerät ist mindestens jeweils ein derartiger Prozessor integriert.
- Eine Vorrichtung oder ein System umfassend zumindest zwei Vorrichtungen, wobei die Vorrichtung bzw. das System eingerichtet sind zur Ausführung und/oder Steuerung der beispielhaften Ausführungsform des erfindungsgemäßen Verfahrens oder umfassend jeweilige Mittel zur Ausführung und/oder Steuerung der Schritte der beispielhaften Ausführungsform des erfindungsgemäßen Verfahrens. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest die beispielhafte Ausführungsform des erfindungsgemäßen Verfahrens auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Systems gemäß der vorliegenden Erfindung;
- Fig. 2: ein Flussdiagramm einer beispielhaften Ausführungsform eines Verfahrens gemäß der vorliegenden Erfindung;
- Fig. 3: ein Flussdiagramm einer beispielhaften Ausführungsform eines Verfahrens gemäß der vorliegenden Erfindung;
- Fig. 4: ein Flussdiagramm einer beispielhaften Ausführungsform eines Verfahrens gemäß der vorliegenden Erfindung;
- Fig. 5: ein Flussdiagramm einer beispielhaften Ausführungsform eines Verfahrens gemäß der vorliegenden Erfindung;
- Fig. 6: ein Flussdiagramm einer beispielhaften Ausführungsform eines Verfahrens gemäß der vorliegenden Erfindung; und
- Fig. 7: ein Flussdiagramm einer beispielhaften Ausführungsform eines Verfahrens gemäß der vorliegenden Erfindung.

### Detaillierte Beschreibung einiger beispielhafter Ausführungsformen der Erfindung

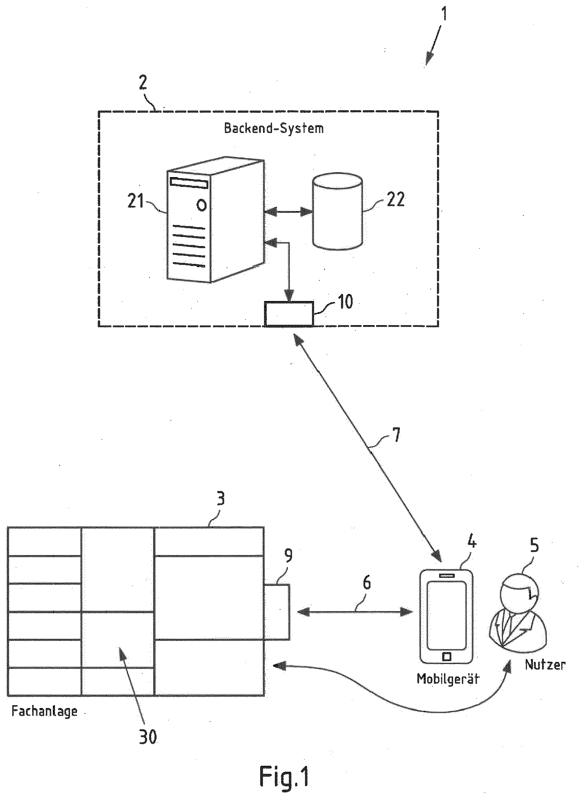

Fig. 1 zeigt schematisch ein System 1 gemäß einer beispielhaften Ausführungsform der vorliegenden Erfindung.

Das System 1 umfasst eine Fachanlage 3 mit einer Mehrzahl von Fächern, von denen ein Fach in Fig. 1 mit Bezugszeichen 30 versehen ist. Jedes der Fächer 30 der Fachanlage 3 ist zur Aufnahme einer Sendung für einen individuellen Benutzer vorgesehen. Einem individuellen Benutzer können auch mehrere Fächer zugeordnet sein. Jedes Fach ist im Grundzustand verriegelt bzw. geschlossen und kann anweisungsgesteuert und individuell durch beispielsweise eine in der Fachanlage 3 vorgesehene Schlossteuereinheit elektrisch entriegelt bzw. geöffnet werden. Ein Beispiel einer derartigen Fachanlage ist eine Fachanlage gemäß dem bekannten Packstation-Konzept der Anmelderin.

Die Fachanlage 3 ist mit einer oder mehreren Kommunikationsschnittstelle(n) 9 ausgerüstet, die beispielsweise eine Schnittstelle zur drahtlosen Kommunikation mit Mobilgerät 4 umfasst/umfassen, beispielsweise mittels optischer Übertragung und/oder mittels Kommunikation, die auf elektrischen, magnetischen oder elektromagnetischen Signalen oder Feldern beruht, insbesondere Nahbereichs-Kommunikation z.B. beruhend auf Bluetooth, WLAN, ZigBee, NFC und/oder RFID. Die Fachanlage 3 ist beispielsweise nicht zur direkten Kommunikation mit dem Backend-System 2 eingerichtet, verfügt also beispielsweise nicht über eine Kommunikationsschnittstelle, die einen Zugang zum Internet oder zu einem anderen Netz, an das das Backend-System 2 angeschlossen ist, ermöglicht. Die Fachanlage ist insbesondere nicht zur Fern-Kommunikation eingerichtet, weist also insbesondere keine Schnittstelle zu einem zellularen Mobilfunksystem, keine DSL-Schnittstelle und keine Local Area Network (LAN)-Schnittstelle auf.

Die aktuelle Belegung der Fächer 30 der Fachanlage 3 mit der Benutzer-Fach-Zuordnung wird beispielsweise zentral durch ein Backend-System 2 verwaltet. Alternativ oder optional kann die aktuelle Fächerbelegung mit der Benutzer-Fach-Zuordnung in der Fachanlage 3 gespeichert sein. Das Backend-System 2 verwaltet zentral, welchem Benutzer Zugang zu welchem im Grundzustand verriegelten Fach 30 der Fachanlage 3 zu erteilen ist. Unter Benutzern können beispielsweise Personen verstanden werden, die die Fachanlage zum Empfangen und/oder Versenden von Sendungen (z.B. Pakete, Briefe, Speisen, Lebensmittel, etc.) verwenden, sowie Zusteller, die derartige Sendungen in die Fachanlage zustellen bzw. aus der Fachanlage abholen. Ein Benutzer kann ein Mensch oder eine Maschine sein, z.B. ein Fahrzeug, ein Roboter oder eine Drohne, um nur ein paar Beispiele zu nennen.

Um sich als für ein Fach 30 zugangsberechtigter Benutzer gegenüber dem Backend-System 2 auszuweisen, muss der Benutzer 5 durch Verwendung eines Mobilgerätes 4 (das beispielsweise ein Mobiltelefon, insbesondere ein Smartphone, oder ein Handscanner eines Zustellers sein kann) auf ihre Gültigkeit zu prüfende Zugangsanforderungsinformationen bereitstellen, die an das Backend-System 2 übertragen werden. Auf dem Mobilgerät 4, beispielsweise ein Smartphone, wird beispielsweise eine App, also ein komplexes Programm, ausgeführt, welche der Benutzer zu einem früheren Zeitpunkt, beispielsweise anlässlich seiner Registrierung zur Nutzung des Systems 1, auf dem Mobilgerät 4 installiert und gestartet hat. Das Mobilgerät 4 ist ausgebildet zum Etablieren einer Nahbereich-Datenkommunikationsverbindung 6, beispielsweise Bluetooth, ZigBee, NFC, RFID oder WLAN mit der Fachanlage 3 bzw. deren Kommunikationsschnittstelle 9 und zum Etablieren einer Fern-Datenkommunikationsverbindung 7, beispielsweise über eine Datenkommunikationsverbindung eines zellularen Mobilfunksystems, mit dem Backend-System 2 bzw. dessen Kommunikationsschnittstelle 10, wie in Fig. 1 durch jeweilige Pfeile veranschaulicht. Beispielsweise basiert die Kommunikation zwischen dem Mobilgerät 4 und dem Backend-System 2 auf dem Internet Protocol (IP), wobei das Backend-System 2 über das Internet erreichbar ist, und das Mobilgerät 4 über eine drahtlose Funkverbindung (z.B. eine zellulare Mobilfunkverbindung) auf das Internet zugreift. Die Kommunikation zwischen dem Mobilgerät 4 und dem Backend-System 2 kann teilweise oder vollständig verschlüsselt erfolgen. Auf dem Mobilgerät 4 kann eine App bzw. ein Programm installiert sein, welche(s) sowohl die Kommunikation mit der Fachanlage 3, dem Benutzer 5 sowie mit dem Backend-System 2 steuert. Dadurch kann der Benutzer 5 beispielsweise ein handelsübliches Smartphone als Mobilgerät 4 einsetzen, auf dem dann lediglich eine derartige App installiert und - beispielsweise durch Registrierung im Backend-System 2 - in Betrieb genommen werden muss.

Das Backend-System 2 ist durch mindestens eine Servervorrichtung (mit mindestens einem Prozessor) 21 und mindestens eine Speichervorrichtung 22 gebildet, die miteinander zum Datenaustausch gekoppelt sind. In der Speichervorrichtung 22 sind registrierten Benutzern des Systems 1 zugeordnete Zugangsberechtigungsinformationen gespeichert, die zumindest teilweise statisch oder zeitlich veränderlich sind. Beispielsweise ist eine Benutzerkennung statisch, während ein Abholcode (z.B. eine mTAN) für jede Sendung neu vergeben wird. Die Servervorrichtung 21 führt einen Prozess zum Authentifizieren des Benutzers 5 durch, indem sie die von dem Benutzer 5 bereitgestellten Zugangsanforderungsinformationen mit in der Speichervorrichtung 22 für diesen Benutzer 5 gespeicherten Zugangsberechtigungsinformationen vergleicht. Unter der notwendigen Bedingung einer Übereinstimmung der bereitgestellten Zugangsanforderungsinformationen und der für den Zugang begehrenden Benutzer 5 gespeicherten Zugangsberechtigungsinformationen wird der Benutzer 5 durch das Backend-System 2 authentifiziert und zum Zugang zu einem oder mehreren Fächern 30 der Fachanlage 3 autorisiert. Andernfalls verweigert das Backend-System 2 dem Benutzer 5 einen Fachzugang. Die Autorisierung erfolgt, indem das Backend-System 2 die Fachanlage 3 anweist, das Fach oder die Fächer 30, welche(s) dem Benutzer 5 (insbesondere temporär) zugeordnet ist/sind, elektrisch zu entriegeln bzw. zu öffnen. Diese Anweisung von dem Backend-System 2 an die Fachanlage 3 wird in der in Fig. 1 veranschaulichten Ausführungsform zunächst über die Fern-Datenkommunikationsverbindung 7 an das Mobilgerät 4 und anschließend von dem Mobilgerät 4 über die Nahbereich-Datenkommunikationsverbindung 6 an die Fachanlage 3 übertragen. Gemäß der in Fig. 1 veranschaulichten Ausführungsform besteht keine direkte Datenkommunikationsverbindung zwischen dem Backend-System 2 und der Fachanlage 3, sondern diese können nur per Datenweiterleitung über das Mobilgerät 4 miteinander kommunizieren.

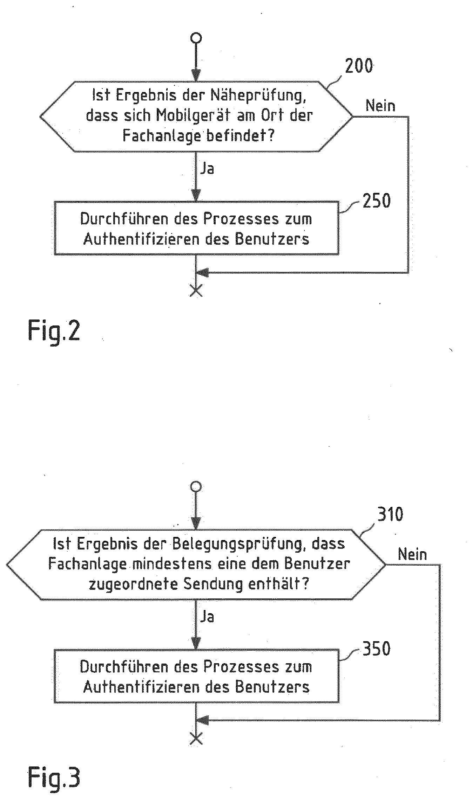

Fig. 2 bis Fig. 5 sind jeweils Flussdiagramme zur Veranschaulichung beispielhafter Ausführungsformen des Verfahrens gemäß der vorliegenden Erfindung.

Bei dem in Fig. 2 veranschaulichten beispielhaften Verfahren wird in einem Schritt 200 zunächst geprüft, ob das Ergebnis einer Näheprüfung ist, dass sich das Mobilgerät des Benutzers am Ort der Fachanlage befindet. Ist dies nicht der Fall, so wird das Verfahren beendet. Andernfalls, wenn das Ergebnis der Näheprüfung positiv ist, sich das Mobilgerät also am Ort der Fachanlage befindet, folgt dem Schritt 200 der Schritt 250, in dem der Prozess zum Authentifizieren des Benutzers durchgeführt wird.

Bei dem in Fig. 3 veranschaulichten beispielhaften Verfahren tritt im Vergleich zu dem in Fig. 2 veranschaulichten Verfahren das Ergebnis der Belegungsprüfung anstelle des Ergebnisses der Näheprüfung. Im Schritt 310 wird geprüft, ob das Ergebnis der Belegungsprüfung ist, dass die Fachanlage mindestens eine dem Benutzer zugeordnete Sendung enthält. Falls die Fachanlage keine dem Benutzer zugeordnete Sendung enthält, wird das Verfahren beendet. Andernfalls, wenn das Ergebnis der Belegungsprüfung positiv ist, die Fachanlage also mindestens eine dem Benutzer zugeordnete Sendung enthält, folgt dem Schritt 310 der Schritt 350, in dem der Prozess zum Authentifizieren des Benutzers durchgeführt wird.

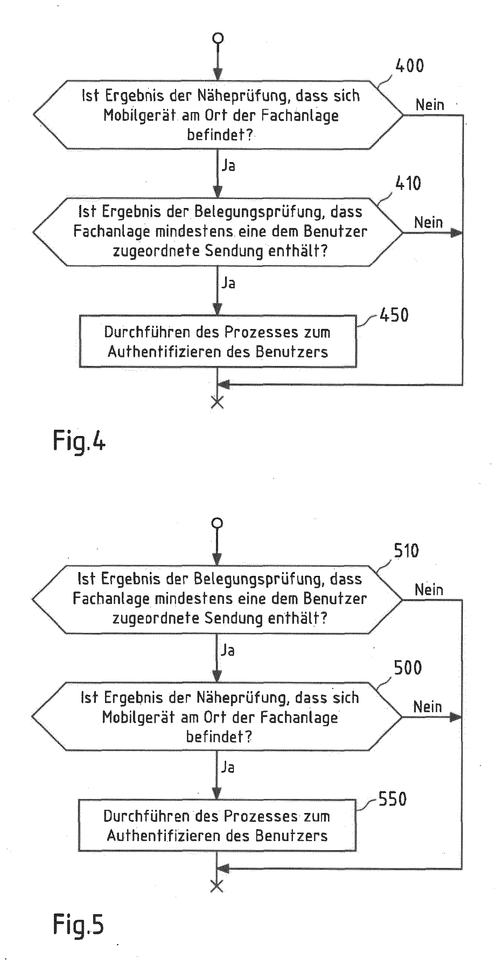

Bei den in Fig. 4 und Fig. 5 veranschaulichten beispielhaften Verfahren werden das Ergebnis der Näheprüfung im Schritt 400 bzw. 500 und das Ergebnis der Belegungsprüfung im Schritt 410 bzw. 510 kaskadiert ausgewertet. Falls das Ergebnis der zuerst berücksichtigten Prüfung, also die Näheprüfung im Schritt 400 von Fig. 4 bzw. die Belegungsprüfung im Schritt 510 von Fig. 5, negativ ist, so wird das Verfahren beendet, ohne dass das Ergebnis der zweiten Prüfung, also die Belegungsprüfung im Schritt 410 von Fig. 4 bzw. die Näheprüfung im Schritt 500 von Fig. 5, berücksichtigt wird. Nur falls das Ergebnis der Näheprüfung und das Ergebnis der Belegungsprüfung beide positiv sind, erfolgt kein Abbruch des Verfahrens, und es wird im Schritt 450 bzw. 550 der Prozess zum Authentifizieren des Benutzers durchgeführt.

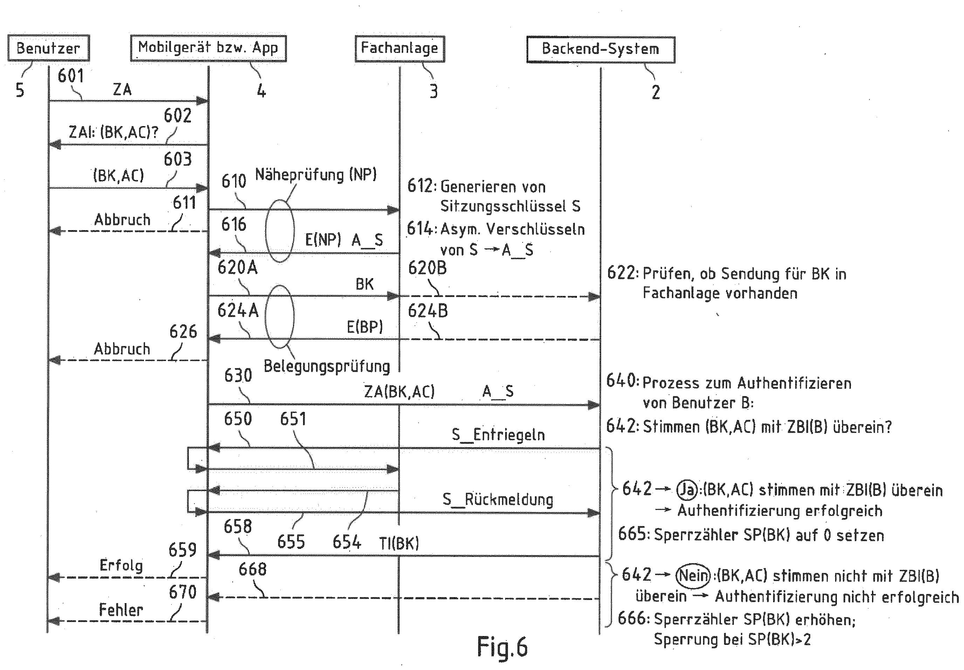

Fig. 6 ist ein Flussdiagramm einer beispielhaften Ausführungsform eines Verfahrens gemäß der vorliegenden Erfindung mit einer detaillierten Veranschaulichung einzelner Schritte und des damit jeweils verbundenen Datenaustausches zwischen dem Mobilgerät, der Fachanlage und dem Backend-System.

Im Schritt 601 bedient der Benutzer 5 die auf dem Mobilgerät 4 ausgeführte App, um eine Zugangsanforderung ZA für die Fachanlage 3 zu initiieren. Daraufhin fordert das Mobilgerät 4 bzw. die App im Schritt 602 den Benutzer 5 zur Eingabe von Zugangsanforderungsinformationen ZAI auf, und zwar in Form einer Benutzerkennung BK und eines Abholcodes AC, welche der Benutzer 5 im sich anschließenden Schritt 603 in das Mobilgerät 4 eingibt bzw. für dieses bereitstellt. Nach Bereitstellung der Zugangsanforderungsinformationen durch den Benutzer folgt beginnend mit dem Schritt 610 die Näheprüfung NP. Konkret richtet das Mobilgerät 4 im Schritt 610 eine Aufforderung an die Fachanlage 3 zum Etablieren einer Nahbereich-Datenkommunikationsverbindung, wie beispielsweise Bluetooth, ZigBee, NFC, RFID oder WLAN, wie sie in Fig. 1 mit der mit Bezugszeichen 6 versehenen Verbindungslinie veranschaulicht ist. Alternativ kann die Aufforderung zum Etablieren der Nahbereich-Datenkommunikationsverbindung auch von der Fachanlage 3 ausgehen. Wenn die angeforderte Nahbereich-Datenkommunikationsverbindung nicht etabliert werden kann (beispielsweise weil die Entfernung zwischen dem Mobilgerät 4 und der Fachanlage 3 zu groß ist), terminiert das Mobilgerät 4 den Verfahrensablauf und meldet dem Benutzer 5 den Abbruch seiner Zugangsanforderung im Schritt 611.

Andernfalls, also beim erfolgreichen Etablieren bzw. Zustandekommen der Nahbereich-Datenkommunikationsverbindung zwischen dem Mobilgerät 4 und der Fachanlage 3, erzeugt die Fachanlage 3 einen zufälligen temporären Sitzungsschlüssel S im Schritt 612. Der temporäre Sitzungsschlüssel S wird anschließend im Schritt 614 durch die Fachanlage einer asymmetrischen Verschlüsselung, beispielsweise mit RSA mit einem 2048-Bit-Schlüssel, unterzogen. Der dazu erforderliche öffentliche Schlüssel ist dazu in der Fachanlage 3 gespeichert worden, beispielsweise bei deren Herstellung oder Inbetriebnahme, oder beim Aufspielen der Firmware oder beim letzten Firmware-Update. Im Schritt 616 stellt das Mobilgerät 4 das erfolgreiche Etablieren der Nahbereich-Datenkommunikationsverbindung als Ergebnis der Näheprüfung E(NP) fest. Zudem wird im Schritt 616 der verschlüsselte Sitzungsschlüssel A_S von der Fachanlage über die etablierte Nahbereich-Datenkommunikationsverbindung an das Mobilgerät 4 übertragen. In einer anderen Ausführungsform wird der verschlüsselte Sitzungsschlüssel A_S beispielsweise erst nach einer positiver Belegungsprüfung separat, also nicht im Verbund mit der Näheprüfung, von der Fachanlage 3 an das Mobilgerät 4 übertragen.

Da die Näheprüfung ergeben hat, dass sich das Mobilgerät 4 am Ort der Fachanlage 3 befindet, weil die Nahbereich-Datenkommunikationsverbindung zwischen der Fachanlage 3 und dem Mobilgerät 4 etabliert werden konnte, initiiert das Mobilgerät 4 bzw. die App als nächstes die Ermittlung des Ergebnisses der Belegungsprüfung BP mittels Übertragung der von dem Benutzer 5 als Zugangsanforderungsinformation bereitgestellten (oder der aus der Token-Information extrahierten) Benutzerkennung BK an entweder die Fachanlage 3 (wobei wie bereits erläutert dabei entweder die für die Näheprüfung verwendete Schnittstelle für eine Nahbereich-Datenkommunikationsverbindung verwendet wird, oder eine andere Schnittstelle für eine Nahbereich-Datenkommunikationsverbindung) oder das Backend-System 2. Falls die aktuelle Belegung der Fächer 30 der Fachanlage 3 mit der Benutzer-Fach-Zuordnung auch in der Fachanlage 3 gespeichert ist, mit der das Mobilgerät 4 bereits die Nahbereich-Datenkommunikationsverbindung etabliert hat, überträgt das Mobilgerät 4 im Schritt 620A eine Belegungsprüfungsanfrage zusammen mit der Benutzerkennung BK an die Fachanlage 3. Für eine alternative Ausführungsform, bei der die aktuelle Belegung der Fächer 30 der Fachanlage 3 mit der Benutzer-Fach-Zuordnung ausschließlich zentral in dem Backend-System 2 verwaltet und gespeichert wird, etabliert das Mobilgerät 4 im Schritt 620B eine Fern-Datenkommunikationsverbindung, beispielsweise über ein zellulares Mobilfunksystem, wie sie in Fig. 1 mit der mit Bezugszeichen 7 versehenen Verbindungslinie veranschaulicht ist, mit dem Backend-System 2 und überträgt über die etablierte Fern-Datenkommunikationsverbindung eine Belegungsprüfungsanfrage zusammen mit der Benutzerkennung BK an das Backend-System 2. Diese Übertragung kann vorteilhaft verschlüsselt sein, beispielsweise basierend auf kryptographischen Schlüsseln, die zwischen dem Mobilgerät 4 bzw. der App und dem Backend-System 2 vereinbart wurden, beispielsweise bei der Installation der App. Daraufhin wird im Schritt 622 durch den Empfänger der Belegungsprüfungsanfrage, also entweder die Fachanlage 3 oder das Backend-System 2, auf Grundlage der empfangenen Benutzerkennung BK geprüft, ob für den dadurch spezifizierten Benutzer 5 mindestens eine Sendung in der Fachanlage 3 vorhanden ist. Das Ergebnis der Belegungsprüfung E(BP) wird im Schritt 624A bzw. 624B von der Fachanlage 3 bzw. dem Backend-System 2 an das Mobilgerät 4 übertragen. Wenn das Ergebnis der Belegungsprüfung E(BP) angibt, dass die Fachanlage keine dem Benutzer 5 zugeordnete Sendung enthält, terminiert das Mobilgerät 4 den Verfahrensablauf und meldet dem Benutzer 5 den Abbruch seiner Zugangsanforderung ZA im Schritt 626.

Wenn das Ergebnis der Belegungsprüfung E(BP) hingegen angibt, dass die Fachanlage mindestens eine dem Benutzer 5 zugeordnete Sendung enthält, wird gemäß dem vorgestellten Verfahren der Prozess zum Authentifizieren des Benutzers initiiert. Zu diesem Zweck überträgt das Mobilgerät 4 im Schritt 630 eine die Benutzerkennung und den Abholcode spezifizierende Zugangsanforderung ZA(BK, AC) zusammen mit dem verschlüsselten Sitzungsschlüssel A_S an das Backend-System 2 über die bereits im Schritt 620B etablierte oder nun im Schritt 630 zu etablierende Fern-Datenkommunikationsverbindung. Anschließend führt das Backend-System 2 beginnend mit Schritt 640 den Prozess zum Authentifizieren des Benutzers durch. Dazu wird im Schritt 642 geprüft, ob die von dem Mobilgerät 4 empfangenen Zugangsanforderungsinformationen BK und AC mit den im Backend-System 2 für den Benutzer B gespeicherten Zugangsberechtigungsinformationen ZBI(B) übereinstimmen. Alternativ kann der Abholcode AC auch bereits im Schritt 620B an das Backend-System 2 übertragen worden sein (wie erwähnt beispielsweise verschlüsselt), wobei dann aber noch keine Auswertung der Zugangsanforderungsinformationen BK und AC erfolgt, sondern dies erst nach erfolgreicher Belegungsprüfung E(BP) erfolgt.

Wenn das Backend-System 2 bei der Durchführung des Prozesses zum Authentifizieren des Benutzers feststellt, dass die Zugangsanforderungsinformationen BK und AC nicht mit den Zugangsberechtigungsinformationen ZBI(B) übereinstimmen (siehe Fig. 6: 642->nein), dann erfolgt keine Authentifizierung des Benutzers durch das Backend-System 2, sondern das Backend-System 2 teilt dem Mobilgerät 2 im Schritt 668 mit, dass keine Authentifizierung des Benutzers B erfolgt ist, woraufhin das Mobilgerät 2 im Schritt 670 eine Fehlermeldung an den Benutzer 5 ausgibt. Der Inhalt dieser Fehlermeldung hängt von einem aktuellen Wert eines benutzerkennungsspezifischen Sperrzählers SP(BK) ab, der bei jeder Durchführung des Prozesses zum Authentifizieren des Benutzers ohne daraus resultierende erfolgreiche Authentifizierung des die Benutzerkennung BK angebenden Benutzers im Schritt 666 um eins inkrementiert wird und bei erfolgreicher Authentifizierung des Benutzers 5 wieder auf Null gesetzt wird, siehe Schritt 665. Falls der aktuelle Wert des Sperrzählers SP(BK) einen Wert von 2 überschreitet, sperrt das Backend-System 2 die Benutzerkennung BK für weitere Authentifizierungsversuche, beispielsweise bis zu einer Entsperrung durch den Betreiber des Backend-Systems, und diese Sperrung wird dem Benutzer 5 im Schritt 670 durch das Mobilgerät 4 mitgeteilt.

Wenn andererseits das Backend-System 2 bei der Durchführung des Prozesses zum Authentifizieren des Benutzers feststellt, dass die Zugangsanforderungsinformationen BK und AC mit den Zugangsberechtigungsinformationen ZBI(B) übereinstimmen (siehe Fig. 6: 642->ja), dann erfolgt die Authentifizierung des Benutzers durch das Backend-System 2. Zum Etablieren eines sicheren Datenaustauschs, mit einer symmetrischen Ende-zu-Ende-Verschlüsselung mit dem Sitzungsschlüssel S (beispielsweise mit AES mit einem 256-Bit-Schlüssel) zwischen dem Backend-System 2 und der Fachanlage 3 während der aktuellen Sitzung bzw. der aktuellen Authentifizierung entschlüsselt das Backend-System 2 zunächst den von dem Mobilgerät 4 empfangenen, asymmetrisch verschlüsselten Sitzungsschlüssel A_S mit Hilfe des privaten Schlüssels des Backend-Systems 2, um den Sitzungsschlüssel S zu erhalten. Anschließend überträgt das Backend-System 2 in den Schritten 650 und 651 einen mit dem Sitzungsschlüssel S verschlüsselten und/oder mit diesem Sitzungsschlüssel signierten Befehl S_Entriegeln an die Fachanlage 3 zum Entriegeln eines Fachs oder mehrerer Fächer 30, welche(s) dem aktuell authentifizierten Benutzer B zugeordnet ist/sind und beispielsweise in dem Befehl S_Entriegeln konkret identifiziert sind (beispielsweise anhand von einer oder mehreren Fachkennungen). Der verschlüsselte bzw. signierte Befehl S_Entriegeln wird zunächst im Schritt 650 von dem Backend-System 2 über die Fern-Datenkommunikationsverbindung an das Mobilgerät 4 übertragen, und anschließend überträgt das Mobilgerät 4 im Schritt 651 den verschlüsselten bzw. signierten Befehl S_Entriegeln an die Fachanlage 3. Für Ausführungsformen, bei denen eine direkte Datenkommunikationsverbindung zwischen dem Backend-System 2 und der Fachanlage 3 besteht, kann der verschlüsselte bzw. signierte Befehl S_Entriegeln auch direkt über diese Datenkommunikationsverbindung ohne Weiterleitung durch das Mobilgerät 4 übertragen werden. Nachdem die Fachanlage 3 den verschlüsselten bzw. signierten Befehl S_Entriegeln erhalten hat, entschlüsselt die Fachanlage 3 ihn mit dem Sitzungsschlüssel S zu dem Befehl Entriegeln und/oder prüft die Authentizität/Integrität des Befehls S_Entriegeln und entriegelt (beispielsweise nur im Falle einer Prüfung der Authentizität und Integrität mit positivem Ergebnis) das oder die spezifizierten Fächer, so dass der Benutzer 5 Zugang zu dem ihm zugeordneten Fach oder Fächern erhält. Anschließend generiert die Fachanlage 3 eine Rückmeldung für das Backend-System 2, verschlüsselt und/oder signiert diese Rückmeldung mit dem Sitzungsschlüssel S zu S_Rückmeldung und überträgt die verschlüsselte bzw. signierte Rückmeldung in den Schritten 654 und 655 von der Fachanlage 3 über das Mobilgerät 4 an das Backend-System 2. Das Backend-System 2 empfängt die Nachricht S_Rückmeldung, entschlüsselt sie mit dem Sitzungsschlüssel S und/oder prüft die Authentizität/Integrität des Befehls S_Rückmeldung, und aktualisiert die gespeicherte aktuelle Belegung der Fächer 30 der Fachanlage 3 mit der Benutzer-Fach-Zuordnung unter Berücksichtigung der aktuellen Änderung der Fachbelegung.

Zum Abschluss des Prozesses zum Authentifizieren des Benutzers kann das Backend-System optional anlässlich der erfolgreichen Authentifizierung des Benutzers 5 eine Token-Information TI(BK) erzeugen, die die Benutzerkennung BK des Benutzers und Sicherheitsdaten enthält, die an das die Token-Information speichernde Mobilgerät 4, an den Installationszeitpunkt und/oder die Version der auf dem Mobilgerät 4 ausgeführten App, und/oder an den Erzeugungszeitpunkt der Token-Information gekoppelt sind. Die in die erzeugte Token-Information TI(BK) aufgenommenen Sicherheitsdaten werden zudem benutzerkennungsspezifisch im Backend-System 2 gespeichert, damit eine von einem Mobilgerät bei einer späteren Authentifizierung übermittelte Token-Information auf ihre Gültigkeit (und beispielsweise auch ihre Integrität) überprüft werden kann. Die erzeugte Token-Information TI(BK) wird im Schritt 658 von dem Backend-System 2 an das Mobilgerät 4 übertragen und auf dem Mobilgerät 4 für die App abrufbar gespeichert.

Zum Abschluss der erfolgreichen Authentifizierung wird der Benutzer im Schritt 659 explizit von dem Mobilgerät 4 über die erfolgreiche Authentifizierung informiert.

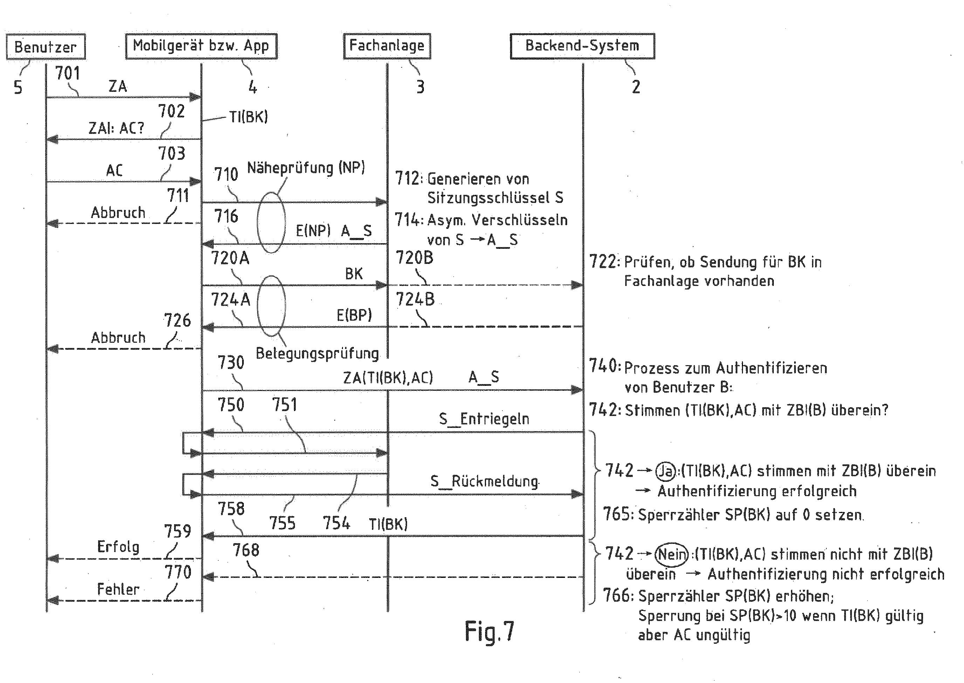

Fig. 7 ist ein Flussdiagramm einer beispielhaften Ausführungsform eines Verfahrens gemäß der vorliegenden Erfindung mit einer detaillierten Veranschaulichung einzelner Schritte, die im wesentlichen den in Fig. 6 veranschaulichten Schritten entsprechen, wobei mit dem Übergang von Fig. 6 zu Fig. 7 für identische bzw. sich entsprechende Schritte die führende Ziffer der Schrittnummerierung von 6 zu 7 verändert wurde. Im Folgenden wird die in Fig. 7 veranschaulichte beispielhafte Ausführungsform des Verfahrens hauptsächlich anhand der Unterschiede zu der in Fig. 6 beispielhaft veranschaulichten Ausführungsform erläutert werden.

Im Unterschied zu der in Fig. 6 veranschaulichten beispielhaften Ausführungsform des Verfahrens wird bei der in Fig. 7 veranschaulichten beispielhaften Ausführungsform des Verfahrens für die Authentifizierung des Benutzers eine im Mobilgerät gespeicherte Token-Information TK(BI) ausgelesen, die die Benutzerkennung BK enthält. Im Gegensatz zu den Schritten 602, 603 fordert das Mobilgerät 4 den Benutzer 5 im Schritt 702 nur zur Eingabe des Abholcodes AC auf und nimmt den eingegebenen Abholcode AC im Schritt 703 an. Die Benutzerkennung BK liest das Mobilgerät 4 bei dem Verfahren von Fig. 7 aus der auf dem Mobilgerät 4 gespeicherten Token-Information TI(BK) aus.

Anders als im Schritt 630 des in Fig. 6 veranschaulichten Verfahrens werden im Schritt 730 des in Fig. 7 veranschaulichten Verfahrens im Schritt 630 die aus dem Mobilgerät 4 ausgelesene Token-Information TI(BK) und der Abholcode AC als Zugangsanforderungsinformationen an das Backend-System 2 übertragen. Bei dem Prozess zum Authentifizieren des Benutzers gemäß dem Verfahren von Fig. 7 wird folglich im Schritt 742 geprüft, ob die empfangene Token-Information TI(BK) und der Abholcode AC mit den Zugangsberechtigungsinformationen ZIB(B) übereinstimen. Im Unterschied zu dem in Fig. 6 veranschaulichten Verfahren repräsentieren bzw. enthalten die benutzerspezifischen Zugangsberechtigungsinformationen ZIB(B) auch die Token-Information TI(BK), deren Daten bei der zuletzt erfolgten Authentifizierung des Benutzers mit der Benutzerkennung in die Zugangsberechtigungsinformationen ZIB(B) aufgenommen wurden. Im dem Fall, dass das Backend-System 2 in dem Schritt 742 keine Übereinstimmung feststellt, erfolgt wie in dem Schritt 642 von Fig. 6 keine Authentifizierung des Benutzers. Anders als beim Schritt 666 von Fig. 6 wird bei Schritt 766 der in Fig. 7 veranschaulichten Ausführungsform aber die Sperrung des Benutzers mit der Benutzerkennung BK weniger restriktiv vorgenommen. Wenn im Schritt 742 festgestellt wurde, dass die Token-Information TI(BK) und der Abholcode AC ungültig sind, dann erfolgt wie im Schritt 666 auch im Schritt 766 eine Sperrung des Benutzers mit der Benutzerkennung BK, wenn der Sperrzähler SP(BK) größer als beispielsweise 2 ist. Wenn aber im Schritt 742 festgestellt wurde, dass die Token-Information TI(BK) gültig ist, und nur der Abholcode AC ungültig ist, dann erfolgt eine Sperrung des Benutzers mit der Benutzerkennung BK erst dann, wenn der Sperrzähler SP(BK) einen deutlich höheren Wert als die zuvor bezüglich Schritt 666 angeführte Vergleichsbasis überschritten hat, beispielsweise erst dann, wenn der Sperrzähler SP(BK) größer als 10 ist. Dies spiegelt wider, dass einem Benutzer 5, der bereits einmal erfolgreich authentifiziert werden konnte, ein größeres Vertrauen entgegengebracht wird als einem unbekannten Benutzer.

In den beispielhaften Verfahren der Fig. 6 und 7 findet die Näheprüfung vor der Belegungsprüfung statt. Diese Reihenfolge kann in alternativen Ausführungsformen des erfindungsgemäßen Verfahrens auch vertauscht sein. Eine Belegungsprüfung mit negativem Ergebnis führt dann zum Abbruch des jeweiligen Verfahrens, so dass keine Näheprüfung mehr ausgeführt wird, während eine Belegungsprüfung mit positivem Ergebnis dazu führt, dass die Näheprüfung ausgeführt wird. Je nach Verlauf der Näheprüfung wird dann der Rest des jeweiligen Verfahrens durchgeführt (positives Ergebnis der Näheprüfung) oder nicht (negatives Ergebnis der Näheprüfung).

Ferner kann in den beispielhaften Verfahren der Fig. 6 und 7 optional eine zusätzliche Prüfung vorgesehen sein. Dabei wird überprüft, ob eine Authentifizierungsanfrage, die den Prozess zum Authentifizieren des Benutzers auslösen soll, aufgrund eines Zählers als verdächtig eingestuft wird oder nicht. Bei der Authentifizierungsanfrage kann es sich beispielsweise um die an das Backend-System 2 gerichtete Anfrage im Schritt 620B bzw. 720B handeln, oder um die an das Backend-System 2 gerichtete Anfrage im Schritt 630 bzw. 730. Der Zähler wird beispielsweise benutzerkennungsspezifisch vom Backend-System 2 geführt und erfasst beispielsweise, wie oft innerhalb eines vordefinierten oder dynamisch nach einer vordefinierten Regel angepassten Zeitintervalls die Authentifizierungsanfrage an das Backend-System 2 gestellt wurde. Überschreitet der Zähler einen vordefinierten oder dynamisch nach einer vordefinierten Regel angepassten Schwellwert, wird beispielsweise entschieden, dass die Authentifizierungsanfrage als verdächtig einzustufen ist, da sie zu häufig innerhalb des Zeitintervalls erfolgt ist. Dies führt dazu, dass der Prozess zum Authentifizieren des Benutzers nicht durchgeführt wird, das Verfahren der Fig. 6 und 7 bricht dann also ab, und der Benutzer 5 wird entsprechend vom Mobilgerät 4 benachrichtigt. Vorzugsweise wird diese zusätzliche Prüfung vor der Belegungsprüfung durchgeführt, so dass bei negativem Prüfungsergebnis die Belegungsprüfung (und auch die nachgelagerten Schritte des Verfahrens der Fig. 6 und 7) nicht mehr ausgeführt werden müssen.

Die in dieser Anmeldung vorgestellten Komponenten des Systems 1 sollen auch jeweils für sich genommen offenbart verstanden werden. Dies gilt namentlich für das Backend-System 2, die Fachanlage 3 und das Mobilgerät 4 sowie die von diesen ausgeführten Verfahren:
Gemäß einem Aspekt umfasst die vorliegende Erfindung ein Backend-System (insbesondere wie oben beispielhaft erläutert), beispielsweise mit mindestens einer Servervorrichtung und mindestens einer damit zum Datenaustausch gekoppelten Speichervorrichtung, das insbesondere ausgebildet ist zu einem oder mehreren der folgenden Schritte:
- Verwaltung und Gewährung (ggf. auch Sperrung eines insbesondere fächerspezifischen und/oder benutzerspezifischen Zugangs zu mittels Anweisung durch das Backend-System individuell entriegelbaren Fächern einer oder mehrerer oben beschriebener Fachanlagen,
- Speichern und Verwalten benutzerspezifischer Zugangsberechtigungsinformationen,
- Empfangen von benutzerseitig bereitgestellten Zugangsanforderungsinformationen,
- Datenaustausch mit der/den verwalteten Fachanlage(n)
- Datenaustausch mit mindestens einem Mobilgerät eines Benutzers,
- Durchführen eines Prozesses zum Authentifizieren eines Benutzers auf Grundlage der von dem Benutzer bereitgestellten Zugangsanforderungsinformationen und der in dem Backend-System gespeicherten Zugangsberechtigungsinformationen, wobei notwendige Bedingung für das Durchführen des Prozesses zum Authentifizieren des Benutzers ist, dass eine Näheprüfung ergeben hat, dass sich ein Mobilgerät des Benutzers am Ort der Fachanlage befindet, und/oder dass eine Belegungsprüfung ergeben hat, dass die Fachanlage mindestens eine dem Benutzer zugeordnete Sendung enthält.

Fortbildungen eines Backend-Systems gemäß diesem Aspekt sind ausgebildet zum Ausführen von Verfahrensschritten aus der Gruppe der Ansprüche 2 bis 10 sowie 12 bis 15.

Gemäß einem weiteren Aspekt umfasst die vorliegende Erfindung eine Fachanlage (insbesondere wie oben beschrieben) mit einer Mehrzahl von insbesondere durch eine Schlosssteuervorrichtung der Fachanlage individuell entriegelbaren Fächern, wobei die Fachanlage insbesondere zur Ausführung von einem oder mehreren der folgenden Schritte ausgebildet ist:
- Etablieren einer Nahbereich-Datenkommunikationsverbindung mit einem Mobilgerät eines Benutzers der Fachanlage,
- Erzeugen eines temporären Sitzungsschlüssels,
- Verschlüsseln des erzeugten temporären Sitzungsschlüssels, bevorzugt mittels asymmetrischer Verschlüsselung,
- Ausgeben des verschlüsselten Sitzungsschlüssels zur Verwendung durch ein die Fachanlage verwaltendes, wie oben beschrieben ausgebildetes Backend-System,
- Ausführen einer Datenkommunikation mit dem Backend-System mit Ende-zu-Ende-Verschlüsselung und/oder Signierung von Nachrichten unter Verwendung des temporären Sitzungsschlüssels zwecks Steuerung der Fachanlage durch das Backend-System.

Gemäß einem weiteren Aspekt umfasst die vorliegende Erfindung ein Mobilgerät (insbesondere wie oben beschrieben), das ausgebildet ist, einen oder mehrere der folgenden Schritte auszuführen:
- Empfangen von Zugangsanforderungsinformationen von einem Benutzer,
- Etablieren einer Datenkommunikation mit einer Fachanlage über eine Nahbereich-Datenkommunikationsverbindung zwischen dem Mobilgerät und der Fachanlage,
- Etablieren einer Datenkommunikation mit einem Backend-System über eine Fern-Datenkommunikationsverbindung zwischen dem Mobilgerät und dem Backend-System,
- Übertragen der empfangenen Zugangsanforderungsinformationen an das Backend-System,
- Etablieren einer Datenkommunikation zwischen der Fachanlage und dem Backend-System mittels Datenweiterleitung durch das Mobilgerät zwecks Steuerung der Fachanlage durch das Backend-System.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimm-, ten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Durchführen eines Prozesses zum Authentifizieren eines Benutzers (250, 350, 450, 550) einer Fachanlage (3) gegenüber einem die Fachanlage verwaltenden Backend-System (2), wobei notwendige Bedingung für das Durchführen des Prozesses zum Authentifizieren des Benutzers (250, 350, 450, 550) ist, dass eine Näheprüfung (200, 400, 500) ergeben hat, dass sich ein Mobilgerät (4) des Benutzers (5) am Ort der Fachanlage (3) befindet, und/oder dass eine Belegungsprüfung (310,410, 510) ergeben hat, dass die Fachanlage (3) mindestens eine dem Benutzer (5) zugeordnete Sendung enthält.

2. Verfahren nach Anspruch 1, wobei die Näheprüfung (200,400, 500) unter der Bedingung, dass eine Nahbereich-Datenkommunikationsverbindung (6, 610, 616, 710, 716) zwischen der Fachanlage (3) und dem Mobilgerät(4) etablierbar oder etabliert ist, ergibt, dass sich das Mobilgerät am Ort der Fachanlage befindet, und/oder wobei die Näheprüfung (200, 400, 500) unter der Bedingung, dass das Backend-System (2) eine von der Fachanlage (3) verschlüsselte Nachricht (A_S) entschlüsseln kann und/oder dass das Backend-System (2) die Integrität und Authentizität einer von der Fachanlage mit einer Signatur versehenen Nachricht festgestellt hat, ergibt, dass sich das Mobilgerät am Ort der Fachanlage befindet.

3. Verfahren nach einem der Ansprüche 1 bis 2, wobei das Ergebnis der Näheprüfung (200, 400, 500) nicht allein mittels einer durch das Mobilgerät (4) eigenständig durchführbaren Positionsermittlung, bevorzugt ohne eigenständige Positionsermittlung durch das Mobilgerät (4), ermittelt wird.

4. Verfahren nach einem der Ansprüche 1 bis 3, wobei das Ergebnis der Näheprüfung (400, 500) und das Ergebnis der Belegungsprüfung (410, 510) kaskadiert als die notwendige Bedingung für das Durchführen des Prozesses zum Authentifizieren des Benutzers (250, 350,450, 550) berücksichtigt werden.

5. Verfahren nach einem der Ansprüche 1 bis 4, wobei das Ergebnis der Belegungsprüfung (410) nur als die notwendige Bedingung für das Durchführen des Prozesses zum Authentifizieren des Benutzers (250, 350,450, 550) ermittelt und/oder berücksichtigt wird, falls die Näheprüfung (400) ergeben hat oder ergibt, dass sich das Mobilgerät am Ort der Fachanlage befindet.

6. Verfahren nach einem der Ansprüche 1 bis 5, wobei das Ergebnis der Belegungsprüfung (310,410, 510) auf Grundlage einer oder mehrerer von dem Mobilgerät (4) bereitgestellten Zugangsanforderungsinformationen (BK) durch das Backend-System festgelegt wird (620B,).

7. Verfahren nach einem der Ansprüche 1 bis 6, wobei eine Datenkommunikationsverbindung (6, 7) zwischen dem Backend-System (2) und der Fachanlage (3), bevorzugt nur, mittels Weiterleitung durch das Mobilgerät (4) betrieben wird.

8. Verfahren nach Anspruch 7, wobei die Datenkommunikationsverbindung (6, 7) zwischen dem Backend-System (2) und der Fachanlage (3) nur unter der notwendigen Bedingung etabliert und betrieben wird, dass die Näheprüfung (200,400, 500) ergeben hat, dass sich das Mobilgerät am Ort der Fachanlage befindet, und/oder dass die Belegungsprüfung (310, 410, 510) ergeben hat, dass die Fachanlage mindestens eine dem Benutzer zugeordnete Sendung enthält, und/oder wobei die Datenkommunikationsverbindung (6, 7) zwischen dem Backend-System (2) und der Fachanlage (3) nur unter der notwendigen Bedingung etabliert und betrieben wird (650-655, 750-755), dass der Benutzer (5) erfolgreich authentifiziert werden konnte (642, 742).

9. Verfahren nach einem der Ansprüche 1 bis 8, ferner umfassend:
- Erzeugen (612, 712) eines temporären Sitzungsschlüssels (S);
- Verschlüsseln(614, 714) des erzeugten temporären Sitzungsschlüssels (S), bevorzugt mittels asymmetrischer Verschlüsselung; und
- Überträgen (616, 716) des verschlüsselten Sitzungsschlüssels (A_S) an das Backend-System (2).

10. Verfahren nach einem der Ansprüche 1 bis 9, ferner umfassend:
- Empfangen (616, 630, 716, 730) eines, bevorzugt mittels asymmetrischer Verschlüsselung, verschlüsselten Sitzungsschlüssels (A_S) von der Fachanlage (3);
- Entschlüsseln des verschlüsselten Sitzungsschlüssels (A_S); und
- Ende-zu-Ende-Verschlüsseln, mit dem entschlüsselten Sitzungsschlüssel (S), einer Datenkommunikation (S_Entriegeln, S_Rückmeldung) zwischen dem Backend-System (2) und der Fachanlage (3), bevorzugt mittels symmetrischer Verschlüsselung.

11. Verfahren nach einem der Ansprüche 1 bis 10, ferner umfassend:
- Erzeugen - bei einer erfolgreichen Authentifizierung eines Benutzers - einer dem Benutzer zugeordneten Token-Information (TI(BK)) und Ausgeben (658, 758) an das Mobilgerät (4) zur Speicherung für einen zukünftigen Prozess zum Authentifizieren des Benutzers.

12. Verfahren nach einem der Ansprüche 1 bis 11, ferner umfassend:
- Empfangen (730) einer einer vorherigen erfolgreichen Authentifizierung des Benutzers zugeordneten Token-Information (TI(BK)) von dem Mobilgerät (4);
- Prüfen der empfangenen Token-Information auf Gültigkeit (742); und
- Lockern oder Aufheben einer Begrenzung, für den durch die gültige Token-Information spezifizierten Benutzer, einer maximalen Anzahl von mit negativem Authentifizierungsergebnis durchführbaren Prozessen zum Authentifizieren des Benutzers (766).

13. Verfahren nach einem der Ansprüche 1 bis 12, wobei eine zusätzliche notwendige Bedingung für die Durchführung des Prozesses zum Authentifizieren des Benutzers ist, dass eine Authentifizierungsanfrage, die den Prozess zum Authentifizieren des Benutzers auslösen soll, aufgrund eines Zählers nicht als verdächtig eingestuft worden ist.

14. Vorrichtung (2, 3, 4) oder System (1) aus mindestens zwei Vorrichtungen, eingerichtet zur Ausführung und/oder Steuerung des Verfahrens nach einem der Ansprüche 1 bis 13 oder umfassend jeweilige Mittel zur Ausführung und/oder Steuerung der Schritte des Verfahrens nach einem der Ansprüche 1 bis 13.

15. Computerprogramm, umfassend Programmanweisungen, die einen Prozessor zur Ausführung und/oder Steuerung des Verfahrens gemäß einem der Ansprüche 1 bis 13 veranlassen, wenn das Computerprogramm auf dem Prozessor läuft.
